# EUROPÄISCHE PATENTSCHRIFT

(11) **EP 1 310 550 B1**
(45) Veröffentlichungstag und Bekanntmachung des Hinweises auf die Patenterteilung: **24.05.2006**
(21) Anmeldenummer: 02024317.6
(22) Anmeldetag: 02.11.2002
(51) Int. Cl.: C11D 3/00, C11D 3/18, C11D 3/37, B01D 19/04

(54) **Entschäumerzusammensetzung und deren Verwendung**
Defoaming composition and use thereof
Composition démoussante et son utilisation

(30) Priorität: 13.11.2001 DE 10155568
(43) Veröffentlichungstag der Anmeldung: 14.05.2003
(73) Patentinhaber: Cognis IP Management GmbH, 40589 Düsseldorf (DE)
(72) Erfinder: Kischkel, Ditmar, 40789 Monheim (DE); Weuthen, Manfred, Dr., 40764 Langenfeld (DE)

(56) Entgegenhaltungen:
- EP-B- 0 708 817
- WO-A-00/11127
- WO-A-95/04124
- DE-A- 19 857 204
- DE-A- 19 953 797

## Beschreibung

Die vorliegende Erfindung betrifft eine bei Raumtemperatur feste Teilchen enthaltende Entschäumerzusammensetzung, mindestens enthaltend mindestens eine entschäumend wirkende Verbindung auf Paraffinbasis und mindestens eine entschäumend wirkende Verbindung auf Silikonbasis.

Wasch- und Reinigungsmittel enthalten üblicherweise Tenside, welche eine Schmutzablösung und Dispersion des Schmutzes in der Wasch- oder Reinigungsflotte bewirken. Solche Tenside neigen jedoch bei Agitation der Flotte oft zu Schaumbildung. Eine übermäßige Schaumbildung in Wasch-oder Reinigungsmaschinen kann jedoch zum Ausfall der Maschinen, zum Austritt von Wasch- oder Reinigungsflotte oder zur Beschädigung der Wasch- oder Reinigungsmaschinen führen.. Es besteht daher ein praktisches Bedürfnis, die Schaumentwicklung während des Waschvorganges zu kontrollieren und insbesondere zu minimieren. In Wasch- und Reinigungsmitteln die zum Einsatz in solchen Maschinen vorgesehen sind, werden daher häufig Entschäumer benötigt um das Schaumverhalten der obengenannten Tenside zu regulieren Zu diesem Zweck werden als Entschäumer sogenannte Antischaummittel eingesetzt, die zum einen die Entwicklung von Schaum und zum anderen schon entstandenen Schaum reduzieren sollen. Im Rahmen des vorliegenden Textes werden die Begriffe "Entschäumer" und "Antischaummittel" synonym benutzt, sofern nicht ausdrücklich etwas anderes angegeben ist.

Als Antischaummittel werden im Rahmen der oben beschriebenen Anwendungen häufig Kombinationen aus Paraffinen und Silikonen eingesetzt. Damit wird dem Problem Rechnung getragen, daß die beiden genannten Verbindungsklassen ihre optimale Wirksamkeit bei unterschiedlichen Temperaturen entfalten. Während die Wirksamkeit der Paraffine bei niedrigeren Temperaturen, beispielsweise bei etwa 40 °C, besonders ausgeprägt ist, zeigen die Silikone eine optimale Wirkung ab etwa 80 °C, beispielsweise bei etwa 95 °C. Die Effektivität der genannten Verbindungsklassen im Hinblick auf die entschäumende Wirkung ist darüber hinaus unterschiedlich.

Dieses Verhalten wirkt sich in dann problematisch aus, wenn eine Entschäumerzusammensetzung für ein Waschmittel formuliert werden soll, das sowohl bei niedrigen Temperaturen als auch bei hohen Temperaturen, beispielsweise für Kochwäsche, eingesetzt werden soll. Dies führt jedoch dazu, daß die Dosierung von Entschäumern in Wasch- und Reinigungsmitteln üblicherweise nur einen Kompromiß zwischen Einsatzmenge und Entschäumungswirkung bei verschiedenen Temperaturen darstellen kann. Um in Wasch- und Reinigungsmitteln sowohl bei hohen als auch bei niedrigen Temperaturen eine optimale Entschäumung zu gewährleisten wird daher üblicherweise der Entschäumer so dosiert, daß die Entschäumungswirkung entweder im hohen oder im niedrigen Temperaturbereich optimal ist, das heißt, die Entschäumermenge für den schlechtesten (schwierigsten) Temperaturbereich optimiert ist. Dies führt jedoch dann entweder im niedrigen oder im hohen Temperaturbereich zu einer Überdosierung und damit zu einem Abweichen vom ökonomischen, ökologischen und technischen Optimum.

Aus dem Stand der Technik ist es bekannt, Paraffine und Silikone zusammen als Entschäumer in Wasch- oder Reinigungsmitteln einzusetzen.

So beschreibt beispielsweise die **EP 0 708 817 B1** ein körniges Schaumregulierungsmittel, enthaltend einen Entschäumerwirkstoff, ein festes Trägermaterial auf Alkalisulfatbasis und ein Celluloseether-Gemisch sowie ein Verfahren zur Herstellung derartiger Schaumregulierungsmittel durch Sprühtrocknung. Die in der Druckschrift beanspruchten Entschäumergranulate enthalten als Entschäumerwirkstoff ein Organopolysiloxan, ein Paraffin oder ein Gemisch aus Organopolysiloxan und Paraffin, wobei die Entschäumerkomponenten bei dem genannten Gemisch jeweils zusammen auf einem Korn vorliegen.

Die **WO 00/27959** beschreibt einen Wasch- und Reinigungsmittelformkörper mit Entschäumergranulat. Die Druckschrift beschreibt zwar ebenfalls Gemische von Paraffinen und Silikonen als für die Entschäumung wirksam, die Gemische liegen jedoch ausschließlich zusammen auf einem Korn vor.

Die **WO 00/11127** betrifft ein Verfahren zur Herstellung von Entschäumergranulaten im Fließbettverfahren. Das beschriebene Verfahren eignet sich zur Herstellung von Silikone enthaltenden Entschäumergranulaten für feste Waschmittel wobei gleichzeitig granuliert und getrocknet wird. Dabei werden die Silikone in Form von wäßrigen Emulsionen auf einem zugemischtes Vorprodukt aus Trägermaterialien und gegebenenfalls weiteren Entschäumern aufgesprüht. Als weitere Entschäumer werden beispielsweise Paraffine vorgeschlagen. Die nach dem beschriebene Verfahren erhältlichen Entschäumer weisen jedoch immer ein Gemisch von Silikonen und Paraffinen auf einem einzigen Korn auf.

Die **WO 95/04124** betrifft einen granularen, zur Verwendung in tensidhaltigen Wasch- und Reinigungsmitteln geeigneten Schaumregulator. Zur Herstellung des Schaumregulators kann beispielsweise ein homogenes Vorgemisch aus Trägermaterial und Entschäumerwirkstoff strangförmig über eine Lochform verpreßt und nach Austritt aus der Lochform mittels einer Schneidevorrichtung abgeschnitten werden. Als Entschäumerwirkstoffe werden Silikone und Paraffine beschrieben. Die genannten Entschäumerwirkstoffe liegen jedoch gemäß der Druckschrift immer zusammen in einem Granulatkorn vor.

Problematisch wirkt sich bei den aus dem Stand der Technik bekannten Entschäumerkombinationen aus, dass aufgrund des bereits oben beschriebenen Sachverhalts eine optimale Entschäumerwirkung in der Regel nur durch eine Überdosierung in des Entschäumers in einem Temperaturbereich erreicht werden kann. Eine solche Überdosierung ist jedoch weder wirtschaftlich noch umweltschonend. Die aus dem Stand der Technik bekannten Entschäumerkombinationen weisen darüber hinaus jedoch noch einen weiteren Nachteil auf. Wie beispielsweise in der **WO 95/04124** beschrieben wird, heben sich die unterschiedlichen Entschäumerkomponenten teilweise gegenseitig in ihrer Wirkung auf. Der daraus resultierende Wirkungsverlust für die Entschäumerkomponenten bedingt jedoch wiederum eine höhere Dosierung der Entschäumer um zu einem akzeptablen Ergebnis zu gelangen. Dies ist jedoch aus den bereits oben genannten ökonomischen und ökologischen Gründen nachteilig.

Es bestand also ein Bedürfnis nach einer Entschäumerzusammensetzung, die sowohl bei tiefen als auch bei hohen Wasch- und Reinigungstemperaturen eine gute Entschäumungswirkung zeigt und dabei eine Überdosierung der Entschäumerkomponenten zumindest reduziert oder im Wesentlichen vermeidet. Weiterhin bestand ein Bedürfnis nach einer Entschäumerzusammensetzung, die sowohl bei niedrigen als auch bei hohen Wasch- und Reinigungstemperaturen wirksam ist, wobei ein Wirkungsverlust durch das Vorliegen zwei verschiedene Entschäumerkomponenten verringert oder vermieden werden soll.

Der vorliegenden Erfindung lag demnach die Aufgabe zugrunde, Entschäumerzusammensetzungen zur Verfügung zu stellen, welche die oben genannten Bedürfnisse erfüllen.

Es wurde nun gefunden, dass eine bei Raumtemperatur feste Teilchen mit einer Teilchengröße von 50 µm bis 3 mm enthaltende Entschäumerzusammensetzung, mindestens enthaltend mindestens eine entschäumend wirkende Verbindung auf Paraffinbasis und mindestens eine entschäumend wirkende Verbindung auf Silikonbasis, wobei mindestens eine entschäumend wirkende Verbindung auf Paraffinbasis und mindestens eine entschäumend wirkende Verbindung auf Silikonbasis auf räumlich getrennten Teilchen vorliegen wobei mindestens zwei räumlich voneinander getrennte Teilchen derart aufgebaut sind, dass mindestens eines der Teilchen eine entschäumend wirkende Verbindung auf Silikonbasis und keine entschäumend wirkende Verbindung auf Paraffinbasis oder eine entschäumend wirkende Verbindung auf Paraffinbasis und keine entschäumend wirkende Verbindung auf Silikonbasisund enthält, und der Gehalt an Verbindungen auf Paraffin- bzw. Silikonbasis in der Entschäumerzusammensetzung 1 bis 50 Gew.-% beträgt die oben genannte Aufgabe löst.

Gegenstand der vorliegenden Erfindung ist daher eine bei Raumtemperatur feste Teilchen enthaltende Entschäumerzusammensetzung, mindestens enthaltend mindestens eine entschäumend wirkende Verbindung auf Paraffinbasis und mindestens eine entschäumend wirkende Verbindung auf Silikonbasis, wobei mindestens eine entschäumend wirkende Verbindung auf Paraffinbasis und mindestens eine entschäumend wirkende Verbindung auf Silikonbasis auf räumlich getrennten Teilchen vorliegen.

Unter dem Begriff "Raumtemperatur" wird im Rahmen des vorliegenden Textes eine Temperatur von 15 bis 25 °C, insbesondere eine Temperatur von 20 bis 23 °C verstanden.

Unter einem "festen Teilchen" wird im Rahmen des vorliegenden Textes ein Teilchen verstanden, daß als solches einen frei tragenden Körper mit einer dreidimensionalen Raumform darstellt, der sich ohne Einfluss äußerer Kräfte in seiner Form bei Raumtemperatur nicht oder nicht wesentlich verändert.

Der Begriff "räumlich getrennt" betrifft im Rahmen des vorliegenden Textes die Anordnung von mindestens zwei jeweils mindestens eine entschäumend wirkende Verbindung auf Paraffinbasis und mindestens eine entschäumend wirkende Verbindung auf Silikonbasis enthaltenden Teilchen zueinander. Unter zwei "räumlich getrennten" Teilchen werden dabei im Rahmen des vorliegenden Textes zwei Teilchen verstanden, die sich höchstens an den Teilchengrenzen berühren. Die Teilchen können dabei in einer losen Verbindung zueinander stehen. Die lose Verbindung der "räumlich getrennten" Teilchen ist dabei höchstens von einer Festigkeit, welche geringer ist als die Festigkeit eines einzelnen Teilchens. Das heißt, dass zur Zerstörung einer "losen Verbindung" zwischen zwei "räumlich getrennten" Teilchen gemäß der vorliegenden Erfindung eine geringere Kraft aufgewendet werden muss als für die Zerstörung (beispielsweise Zerkleinerung oder Spaltung) eines einzelnen Teilchens. Der Begriff "räumlich getrennt" definiert daher im Sinne der vorliegenden Erfindung zwei im Hinblick auf ihre Wirkstoffzusammensetzung unterschiedliche Teilchensysteme die in einem Gemisch zusammen vorliegen.

Als entschäumend wirkende Verbindungen auf Paraffinbasis kommen im Rahmen der vorliegenden Erfindung grundsätzlich alle Verbindungen auf Paraffinbasis in Frage, die eine entschäumende Wirkung auf tensidhaltige, wäßrige Lösungen ausüben. Besonders geeignet sind jedoch im Rahmen der vorliegenden Erfindung Paraffinwachse.

Erfindungsgemäß in Frage kommende Paraffinwachse sind im allgemeinen komplexe Stoffgemische ohne scharfen Schmelzpunkt. Zur Charakterisierung bestimmt man üblicherweise ihren Schmelzbereich durch Differential-Thermo-Analyse (DTA), wie in **"The Analyst" 87 (1962), 420,** beschrieben, und/oder ihren Erstarrungspunkt. Darunter versteht man die Temperatur, bei der das Wachs durch langsames Abkühlen aus dem flüssigen in den festen Zustand übergeht. Erfindungsgemäß sind sowohl bei Raumtemperatur vollständig flüssige Paraffine, das heißt solche mit einem Erstarrungspunkt unter 25 °C, als auch bei Raumtemperatur feste Paraffine brauchbar.

Vorzugsweise ist das Paraffinwachs bei Raumtemperatur fest und liegt bei 100 °C in vollständig flüssiger Form vor. Eingesetzt werden können beispielsweise die aus der europäischen Patentanmeldung **EP 0 309 931** bekannten Paraffinwachsgemische aus beispielsweise 26 Gew.-% bis 49 Gew.-% mikrokristallinem Paraffinwachs mit einem Erstarrungspunkt von 62 °C bis 90 °C, 20 Gew.-% bis 49 Gew.-% Hartparaffin mit einem Erstarrungspunkt von 42 °C bis 56 °C und 2 Gew.-% bis 25 Gew.-% Weichparaffin mit einem Erstarrungspunkt von 35 °C bis 40 °C.

Vorzugsweise werden im Rahmen der vorliegenden Erfindung Paraffine beziehungsweise Paraffingemische verwendet, die im Bereich von 30 °C bis 90 °C erstarren. Dabei ist zu beachten, daß auch bei Raumtemperatur fest erscheinende Paraffinwachsgemische unterschiedliche Anteile an flüssigem Paraffin enthalten können. Bei den erfindungsgemäß brauchbaren Paraffinwachsen liegt der Flüssiganteil bei 40 °C möglichst hoch, ohne bei dieser Temperatur schon 100 % zu betragen. Bevorzugte Paraffinwachsgemische weisen bei 40 °C einen Flüssiganteil von mindestens 50 Gew.-%, insbesondere von 55 Gew.-% bis 80 Gew.-%, und bei 60 °C einen Flüssiganteil von mindestens 90 Gew.-% auf.

Die Temperatur, bei der ein Flüssiganteil von 100 Gew.-% des Paraffinwachses erreicht wird, liegt bei besonders bevorzugten Paraffinwachsgemischen noch unter 85 °C, insbesondere bei 75 °C bis 82 °C. Außerdem ist darauf zu achten, daß die Paraffine möglichst keine flüchtigen Anteile enthalten.

Bevorzugte Paraffinwachse enthalten weniger als 1 Gew.-%, insbesondere weniger als 0,5 Gew.-% bei 110°C und Normaldruck verdampfbare Anteile. Erfindungsgemäß brauchbare Paraffinwachse können beispielsweise unter den Handelsbezeichnungen Lunaflex® der Firma Fuller sowie Deawax® der DEA Mineralöl AG bezogen werden.

Im Sinne der vorliegenden Erfindung sind geeignete entschäumend wirkende Verbindungen auf Silikonbasis grundsätzlich alle Silikonverbindungen, die eine für die Anwendung in Wasch- oder Reinigungsmitteln ausreichende schaumdämpfende Wirkung aufweisen.

Als entschäumend wirkende Verbindungen auf Silikonbasis sind beispielsweise übliche Organopolysiloxane, die einen Gehalt an feinteiliger Kieselsäure, die wiederum auch silaniert sein kann, aufweisen. Derartige Organopolysiloxane sind beispielsweise in der europäischen Patentanmeldung **EP 0 496 510 A1** beschrieben, auf die ausdrücklich Bezug genommen wird und deren Offenbarung im Hinblick auf die genannten Organopolysiloxan als Bestandteil der Offenbarung des vorliegenden Textes betrachtet wird. Besonders bevorzugt sind dabei Polydiorganosiloxane wie sie aus dem Stand der Technik bekannt sind. Geeignete Polydiorganosiloxane weisen eine nahezu lineare Kette auf und sind gemäß folgender Formel (I) gekennzeichnet, 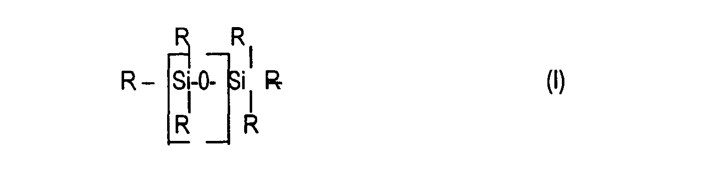 wobei R unabhängig voneinander für einen Alkyl- oder einen Arylrest und n für Zahlen im Bereich von 40 bis 1500 stehen kann. Beispiele für geeignete Substituenten R sind Methyl, Ethyl, Propyl, Isobutyl, tert. Butyl und Phenyl.

In der Regel enthalten geeignete Polydiorganosiloxane feinteilige Kieselsäure, die auch silaniert sein kann. Insbesondere geeignet sind im Sinne der vorliegenden Erfindung kieselsäurehaltige Dimethylpolysiloxane.

Vorteilhafterweise haben die Polydiorganosiloxane eine Viskosität nach Brookfield bei 25 °C im Bereich von 5000 mPas bis 30 000 mPas, insbesondere von 15 000 bis 25 000 mPas.

Die erfindungsgemäßen Entschäumerzusammensetzungen liegen als bei Raumtemperatur feste Teilchen vor. Es ist daher im Sinne der Erfindung vorteilhaft, wenn die entschäumend wirkenden Verbindungen auf Paraffinbasis oder Silikonbasis auf einem entsprechenden festen Trägermaterial aufgebracht sind.

Als Trägermaterial eignen sich im Sinne der Erfindung alle geeigneten anorganischen und/oder organischen Trägermaterialien. Beispiele für typische anorganische Trägermaterialien Alkalicarbonate, Alumosilikate, wasserlösliche Schichtsilikate, Alkalisilikate, Alkalisulfate, beispielsweise Natriumsulfat und Alkaliphosphate. Bei den Alkalisilikaten handelt es sich vorzugsweise um eine Verbindung mit einem Molverhältnis Alkalioxid zu SiO₂ von 1:1,5 bis 1:3,5. Die Verwendung derartiger Silikate resultiert in besonders guten Korneigenschaften, insbesondere hoher Abriebsstabilität und dennoch hoher Auflösungsgeschwindigkeit in Wasser. Zu den als Trägermaterial bezeichneten Alumosilikaten gehören insbesondere die Zeolithe, beispielsweise Zeolith NaA und NaX. Zu den als wasserlösliche Schichtsilikate bezeichneten Verbindungen gehören beispielsweise amorphes oder kristallines Wasserglas.

Als organische Trägermaterialien kommen zum Beispiel filmbildende Polymere, beispielsweise Polyvinylalkohole, Polyvinylpyrrolidone, Poly(meth)acrylate, Polycarboxylate, Cellulosederivate und Stärke in Frage. Brauchbare Celluloseether sind insbesondere Alkalicarboxymethylcellulose, Methylcellulose, Ethylcellulose, Hydroxyethylcellulose und sogenannte Cellulosemischether, die zum Beispiel Methylhydroxyethylcellulose und Methylhydroxypropylcellulose, sowie deren Mischungen. Besonders geeignete Mischungen sind aus Natrium-Carboxymethylcellulose und Methylcellulose zusammengesetzt, wobei die Carboxymethylcellulose üblicherweise einen Substitutionsgrad von 0,5 bis 0,8 Carboxymethylgruppen pro Anhydroglukoseeinheit und die Methylcellulose einen Substitutionsgrad von 1,2 bis 2 Methylgruppen pro Anhydroglukoseeinheit aufweist. Die Gemische enthalten vorzugsweise Alkalicarboxymethylcellulose und nichtionischen Celluloseether in Gewichtsverhältnissen von 80:20 bis 40:60, insbesondere von 75:25 bis 50:50. Derartige Celluloseethergemische können in fester Form oder als wäßrige Lösungen verwendet werden, die in üblicher Weise vorgequollen sein können. Im Sinne der vorliegenden Erfindung eignet sich als Träger beispielsweise native Stärke, die aus Amylose und Amylopectin aufgebaut ist. Als native Stärke wird Stärke bezeichnet, wie sie als Extrakt aus natürlichen Quellen zugänglich ist, beispielsweise aus Reis, Kartoffeln, Mais und Weizen. Native Stärke ist ein handelsübliches Produkt und damit leicht zugänglich.

Als Trägermaterialien können einzelne oder mehrere der vorstehend genannten Verbindungen eingesetzt werden, insbesondere ausgewählt aus der Gruppe der Alkalicarbonate, Alkalisulfate, Alkaliphosphate, Zeolithe, wasserlösliche Schichtsilikate, Alkalisilikate, Polycarboxylate, Carboxymethylcellulose, Polyacrylat/Polymethacrylat und Stärke. Besonders geeignet sind Mischungen von Alkalicarbonaten, insbesondere Natriumcarbonat, Alkalisilikaten, insbesondere Natriumsilikat, Alkalisulfaten, insbesondere Natriumsulfat, Zeolithen, Polycarboxylate, insbesondere Poly(meth)acrylat, und Celluloseether und nativer Stärke. Die Trägermaterialien können folgendermaßen zusammengesetzt sein:
0 bis 2 Gew.-% Celluloseether
0 bis 75 Gew.-% native Stärke
0 bis 30 Gew.-% Alkalisilikat
0 bis 75 Gew.-% Alkalisulfat
0 bis 95 Gew.-% Alkalicarbonat
0 bis 95 Gew.-% Zeolithe
0 bis 5 Gew.-% Polycarboxylate, wobei sich die Summe zu 100 Gew.-% addieren muß.

Der Gehalt der erfindungsgemäßen Entschäumerzusammensetzungen an entschäumend wirkenden Verbindungen auf Paraffin- und Silikonbasis beträgt 1 bis 50 Gew.-%, beispielsweise 3 bis 40, 4 bis 30 oder 5 bis 20 Gew.-% oder dazwischen liegende Werte, beispielsweise 8 bis 15 oder 10 bis 13 Gew.-%. Im Rahmen einer bevorzugten Ausführungsform der Erfindung beträgt der Gehalt der erfindungsgemäßen Entschäumerzusammensetzungen an entschäumend wirkenden Verbindungen auf Paraffin- und Silikonbasis 5 bis 20 Gew.-%, insbesondere 8 bis 15 Gew.-%.

Der zu 100 Gew.-% fehlende Anteil kann beispielsweise ausschließlich aus einem der oben genannten Trägermaterialien oder aus einem Gemisch aus zwei oder mehr der oben genannten Trägermaterialien bestehen. Es ist jedoch erfindungsgemäß ebenso vorgesehen, daß eine erfindungsgemäße Entschäumerzusammensetzung noch einen weiteren Zusatzstoff oder ein Gemisch aus zwei oder mehr weiteren Zusatzstoffen enthält.

Als Zusatzstoffe eignen sich beispielsweise weitere Entschäumer wie wachsartige Entschäumer. Als "wachsartig" werden solche Verbindungen verstanden, die einen Schmelzpunkt bei Atmosphärendruck über 25 °C (Raumtemperatur), vorzugsweise über 50 °C und insbesondere über 70 °C aufweisen. Die gegebenenfalls erfindungsgemäß enthaltenen wachsartigen Entschäumersubstanzen sind in Wasser praktisch nicht löslich, d.h. bei 20 °C weisen sie in 100 g Wasser eine Löslichkeit unter 0,1 Gew.-% auf.

Prinzipiell können alle aus dem Stand der Technik bekannten wachsartigen Entschäumersubstanzen zusätzlich enthalten sein. Geeignete wachsartige Verbindungen sind beispielsweise Bisamide, Fettalkohole, Fettsäuren, Carbonsäureester von ein- und mehrwertigen Alkoholen sowie Paraffinwachse oder Mischungen derselben. Geeignet sind Bisamide, die sich von gesättigten Fettsäuren mit 12 bis 22, vorzugsweise 14 bis 18 C-Atomen sowie von Alkylendiaminen mit 2 bis 7 C-Atomen ableiten. Geeignete Fettsäuren sind Laurin-, Myristin-, Stearin-, Arachin- und Behensäure sowie deren Gemische, wie sie aus natürlichen Fetten beziehungsweise gehärteten Ölen, wie Talg oder hydriertem Palmöl, erhältlich sind. Geeignete Diamine sind beispielsweise Ethylendiamin, 1,3-Propylendiamin, Tetramethylendiamin, Pentamethylendiamin, Hexamethylendiamin, p-Phenylendiamin und Toluylendiamin. Bevorzugte Diamine sind Ethylendiamin und Hexamethylendiamin. Besonders bevorzugte Bisamide sind Bis-myristoyl-ethylendiamin, Bis-palmitoyl-ethylendiamin, Bis-stearoylethylendiamin und deren Gemische sowie die entsprechenden Derivate des Hexamethylendiamins.

Geeignete Carbonsäureester leiten sich von Carbonsäuren mit 12 bis 28 Kohlenstoffatomen ab. Insbesondere handelt es sich um Ester von Behensäure, Stearinsäure, Ölsäure, Palmitinsäure, Myristinsäure und/oder Laurinsäure.

Der Alkoholteil des Carbonsäureesters enthält einen ein- oder mehrwertigen Alkohole mit 1 bis 28 Kohlenstoffatomen in der Kohlenwasserstoffkette. Beispiele von geeigneten Alkoholen sind Behenylalkohol, Arachidylalkohol, Kokosalkohol, 12-Hydroxystearylalkohol, Oleylalkohol und Laurylalkohol sowie Ethylenglykol, Glycerin, Methanol, Ethanol, Isopropanol, Vinylalkohol, Saccharose, Erythrit, Pentaerythrit, Sorbitan und/oder Sorbit. Bevorzugte Ester sind solche von Methanol, Ethylenglykol, Glycerin und Sorbitan, wobei der Säureteil des Esters insbesondere aus Behensäure, Stearinsäure, Ölsäure, Palmitinsäure oder Myristinsäure ausgewählt wird.

In Frage kommende Ester mehrwertiger Alkohole sind beispielsweise Xylitmonopalmitat, Pentarythritmonostearat, Glycerinmonostearat, Ethylenglykolmonostearat und Sorbitanmonostearat, Sorbitanpalmitat, Sorbitanmonolaurat, Sorbitandilaurat, Sorbitandistearat, Sorbitandibehenat, Sorbitandioleat sowie gemischte Talgalkylsorbitanmono- und -diester. Brauchbare Glycerinester sind die Mono-, Di- oder Triester von Glycerin und genannten Carbonsäuren, wobei die Mono- oder Dieester bevorzugt sind. Glycerinmonostearat, Glycerinmonooleat, Glycerinmonopalmitat, Glycerinmonobehenat und Glycerindistearat sind Beispiele hierfür.

Beispiele für geeignete natürliche Ester sind Bienenwachs, das hauptsächlich aus den Estern CH₃(CH₂)₂₄COO(CH₂)₂₇CH₃ und CH₃(CH₂)₂₆COO(CH₂)₂₅CH₃ besteht, und Carnaubawachs, das ein Gemisch von Carnaubasäurealkylestern, oft in Kombination mit geringen Anteilen freier Camaubasäure, weiteren langkettigen Säuren, hochmolekularen Alkoholen und Kohlenwasserstoffen, ist.

Geeignete Carbonsäuren als weitere Entschäumerverbindung sind insbesondere Behensäure, Stearinsäure, Ölsäure, Palmitinsäure, Myristinsäure und Laurinsäure sowie deren Gemische, wie sie aus natürlichen Fetten bzw. gegebenenfalls gehärteten Ölen, wie Talg oder hydriertem Palmöl, erhältlich sind. Bevorzugt sind gesättigte Fettsäuren mit 12 bis 22, insbesondere 14 bis 18 C-Atomen.

Geeignete Fettalkohole als weitere Entschäumerverbindung sind die hydrierten Produkte der beschriebenen Fettsäuren.

Zusätzlich zu den in einer erfindungsgemäßen Entschäumerzusammensetzung enthaltenen entschäumend wirkenden Verbindungen auf Paraffinbasis und auf Silikonbasis kann eine erfindungsgemäße Entschäumerzusammensetzung als Zusatzstoffe darüber hinaus auch Fettketone der Formel (I),

**R**^{**3**}**-CO-R**^{**4**}**(I)**

in der R³ und R⁴ unabhängig voneinander lineare oder verzweigte Kohlenwasserstoffreste mit 11 bis 25 Kohlenstoffatomen und 0 oder 1 Doppelbindung darstellen, enthalten.

Derartige Ketone stellen bekannte Stoffe dar, die nach den einschlägigen Methoden der präparativen organischen Chemie erhalten werden können. Zu ihrer Herstellung geht man beispielsweise von Carbonsäuremagnesiumsalzen aus, die bei Temperaturen oberhalb von 300°C unter Abspaltung von CO₂ und Wasser pyrolysiert werden, beispielsweise gemäß der deutschen Offenlegungsschrift **DE 25 53 900 A.** Geeignete Fettketone sind solche, die durch Pyrolyse der Magnesiumsalze von Laurinsäure, Myristinsäure, Palmitinsäure, Palmitoleinsäure, Stearinsäure, Ölsäure, Elaidinsäure, Petroselinsäure, Arachinsäure, Gadoleinsäure, Behensäure oder Erucasäure hergestellt werden.

Geeignet sind beispielsweise Fettketone der Formel (I), in der R³ und R⁴ für Alkylreste mit 15 bis 21 Kohlenstoffatomen stehen. Besonders geeignet sind Palmiton (Hentriacontanon-16; R³ und R⁴ steht für einen Alkylrest mit 15Kohlenstoffatomen), Tritriacontanon-17 (R³ und R⁴ steht für einen Alkylrest mit 16 Kohlenstoffatomen), Stearon (Pentatriacontanon-18; R³ und R⁴ steht für einen Alkylrest mit 17 Kohlenstoffatomen) Heptatriacontanon-19 (R³ und R⁴ steht für einen Alkylrest mit 18 Kohlenstoffatomen), Arachinon (Nonatriacontanon-20; R³ und R⁴ steht für einen Alkylrest mit 19 Kohlenstoff atomen), Hentetracontanon-21 (R³ und R⁴ steht für einen Alkylrest mit 20 Kohlenstoffatomen) und/oder Behenon (Triatetracontanon-22; R³ und R⁴ steht für einen Alkylrest mit 21 Kohlenstoffatomen).

Die Zusatzstoffe können in den erfindungsgemäßen Entschäumerzusammensetzungen beispielsweise derart vorliegen, dass sie jeweils in den eine entschäumend wirkende Verbindung auf Paraffinbasis oder eine entschäumend wirkende Verbindung auf Silikonbasis aufweisenden Teilchen enthalten sind. Es ist jedoch ebenso möglich und erfindungsgemäß vorgesehen, dass die Zusatzstoffe im Entschäumergemisch ebenfalls als diskrete, räumlich getrennte Teilchen, gegebenenfalls auf Trägerstoffen aufgezogen, vorliegen.

Es ist im Rahmen der Erfindung erforderlich, dass die erfindungsgemäßen Entschäumerverbindungen mindestens zwei verschiedene Sorten an Teilchen enthalten, wobei mindestens eine Sorte an Teilchen eine entschäumend wirkende Verbindung auf Paraffinbasis und mindestens eine weitere Sorte an Teilchen mindestens eine entschäumend wirkende Verbindung auf Silikonbasis enthält. Es ist dabei zusätzlich erforderlich, dass mindestens zwei räumlich voneinander getrennte Teilchen derart aufgebaut sind, dass mindestens eines der Teilchen eine entschäumend wirkende Verbindung auf Silikonbasis und keine entschäumend wirkende Verbindung auf Paraffinbasis oder eine entschäumend wirkende Verbindung auf Paraffinbasis und keine entschäumend wirkende Verbindung auf Silikonbasis enthält. Es ist jedoch erfindungsgemäß möglich und vorgesehen, dass beispielsweise eines der Teilchen oder eine Teilchensorte eine entschäumend wirkende Verbindung auf Silikonbasis und eine entschäumend wirkende Verbindung auf Paraffinbasis enthält während mindestens ein anderes Teilchen oder eine andere Teilchensorte eine der beiden genannten entschäumend wirkenden Verbindungen nicht enthält, während es die andere enthält. So kann eine erfindungsgemäße Entschäumerzusammensetzung beispielsweise eine Teilchensorte mit Paraffin- und Silikonentschäumer und eine andere Teilchensorte nur einen Paraffinentschäumer enthalten. Dem steht nicht entgegen, dass die Teilchen neben den jeweils angegebenen Entschäumern noch einen der oben genannten Zusatzstoffe oder ein Gemisch aus zwei oder mehr davon enthalten. Anstelle des Paraffinwachses können daher auch Gemische aus Paraffinwachs mit bekanntlich schaumregulierendem Silikonöl eingesetzt werden. Dabei kann das Silikonöl in bekannter Weise feinteilige Füllstoffe, beispielsweise hydrophiles oder hydrophobes Siliziumdioxid, sogenannte hochdisperse Kieselsäure, enthalten, wobei pyrogenes oder gefälltes, insbesondere hydrophobiertes Siliziumdioxid mit einer Oberfläche von mindestens 50 m²/g besonders bevorzugt ist, wie es beispielsweise unter den Bezeichnungen Aerosil® oder Sipernat® im Handel erhältlich ist. Silikonöl, beispielsweise Polydimethylsiloxan, ist in den Mischungen aus Paraffinwachs und Silikonöl vorzugsweise in solchen Mengen enthalten, daß das Verhältnis von Paraffin zu Silikonöl im Bereich von 1:10 bis 10:1, beispielsweise 1:3 bis 3:1 liegt.

Das Verhältnis von eine entschäumend wirkenden Verbindungen auf Paraffinbasis und entschäumend wirkenden Verbindungen auf Silikonbasis in der erfindungsgemäßen Entschäumerzusammensetzung kann in weiten Grenzen variieren. Geeignet sind beispielsweise Verhältnisse in einem Bereich von 1:10 bis 10:1, beispielsweise 1:5 bis 5:1 oder 1:3 bis 3:1. Welches Verhältnis zu einer optimalen Entschäumungswirkung und zu einer möglichst gleichbleibenden Entschäumungswirkung in Hinblick auf niedrige und hohe Wasch- und Reinigungstemperaturen führt, ist beispielsweise von den im Wasch- oder Reinigungsmittel eingesetzten Tensiden abhängig. Grundsätzlich sei hier aber betont, dass der erfindungsgemäße Effekt innerhalb der oben genannten Verhältnisse eintritt und die Optimierung an spezifische Tenside und Tensidmischungen in Wasch- oder Reinigungsmitteln im Rahmen weniger Routineversuche erfolgen kann. Die im Rahmen des vorliegenden Textes eingefügten Beispiele geben hier einen Anhaltspunkt im Hinblick auf verschiedene, typischerweise in Waschmitteln eingesetzten Tensidtypen und Gemische.

So läßt beispielsweise die Wirksamkeit der Paraffinentschäumer bei hohem Gehalt an Niotensiden nach, so daß in diesem Fall eine höhere Dosierung an Paraffinen erforderlich ist. Weiterhin ist beispielsweise die Wirksamkeit der Paraffinentschäumer zusammen mit anionischen Tensiden aus der Klasse der ABS höher als bei anionischen Tensiden aus der Klasse der FAS, so daß auch in diesem Fall (FAS) eine höhere Dosierung an Paraffinentschäumem erforderlich ist.

Die erfindungsgemäßen Entschäumerzusammensetzungen enthalten die Entschäumer tragenden Komponenten als Feststoffteilchen. Die Herstellung solcher Feststoffteilchen kann nach verschiedenen Verfahren erfolgen. Bei allen Verfahren ist darauf zu achten, dass die Herstellung von Feststoffteilchen mit entschäumend wirkenden Verbindungen auf Paraffinbasis und entschäumend wirkenden Verbindungen auf Silikonbasis derart getrennt durchgeführt wird, dass im Sinne des oben gesagten mindestens eines der Teilchen eine entschäumend wirkende Verbindung auf Silikonbasis und keine entschäumend wirkende Verbindung auf Paraffinbasis oder eine entschäumend wirkende Verbindung auf Paraffinbasis und keine entschäumend wirkende Verbindung auf Silikonbasis enthält.

Nach einem ersten Verfahren stellt man in der Regel zuerst das Trägermaterial in üblicher Weise durch Sprühtrocknen einer wäßrigen Aufschlämmung der Trägermaterialien her. Auf die derart sprühgetrockneten, körnigen Trägermaterialien werden die entschäumend wirksamen Verbindungen auf Paraffin- oder Silikonbasis sowie gegebenenfalls die Zusatzstoffe, beispielsweise zusätzlich vorhandene geschmolzene wachsartige Entschäumersubstanzen, beispielsweise durch sukzessives Zumischen, insbesondere in Form eines Sprays aufgebracht. Das Trägermaterial wird dabei vorzugsweise durch Mischorgane oder durch Fluidisierung in Bewegung gehalten, um eine gleichmäßige Beladung des Trägermaterials zu gewährleisten. Die dafür beispielsweise verwendeten Sprühmischer können kontinuierlich oder diskontinuierlich betrieben werden.

Gemäß einer zweiten Ausführungsform kann man die Feststoffteilchen durch Sprühtrocknung einer wäßrigen Lösung bzw. Aufschlämmung von Trägermaterialien und jeweils den gewünschten Entschäumersubstanzen auf Paraffin- oder Silikonbasis herstellen. Das Sprühtrocknen der Lösungen bzw. Aufschlämmungen kann in im Prinzip bekannter Weise in dafür vorgesehenen Anlagen, sogenannten Sprühtürmen, mittels heißer, in Gleichstrom oder Gegenstrom geführter Trocknungsgase erfolgen. Dabei ist die Trocknung durch im Gleichstrom mit dem Sprühgut geführte Trocknungsgase bevorzugt, da so insbesondere bei paraffinhaltigen Vorprodukten der auf die potentielle Heißluftflüchtigkeit einiger Bestandteile des Paraffins zurückzuführende Aktivitätsverlust auf ein Minimum gesenkt werden kann.

Gemäß einer dritten Ausführungsform können die Feststoffteilchen durch gleichzeitige Granulation und Trocknung einer wäßrigen Lösung bzw. Aufschlämmung von Trägermaterialien und den jeweiligen Entschäumersubstanzen hergestellt werden. Die gleichzeitige Trocknung und Granulierung wird vorzugsweise in der Wirbelschicht nach dem SKET-Verfahren beispielsweise gemäß der europäischen Patentschrift **EP 603 207 B** oder nach dem Fließbettverfahren durchgeführt, die im folgenden noch näher erläutert werden.

Beispielsweise erfolgt die Herstellung der Feststoffteilchen durch Aufsprühen der entschäumend wirkenden Verbindungen auf das Trägermaterial unter gleichzeitigem Trocknen und Granulieren in einer Wirbelschicht. Einer Ausführungsform dieses Wirbelschicht-Verfahrens entsprechend erfolgt die Granulierung und das gleichzeitige Trocknen in einer Wirbelschicht oberhalb eines mit Durchtrittsöffnungen für die Trocknungsluft versehenen kreisrunde Anströmbodens, vorzugsweise nach dem sogenannten SKET-Verfahren. Dabei werden die entschäumend wirkenden Verbindungen über eine oder mehrere Düsen in die Wirbelschicht eingebracht. Nähere Angaben zu dem sogenannten SKET-Verfahren sind in den deutschen Patentanmeldungen **DE 197 50 424.8** und **DE 197 56 681.2** sowie in der europäischen Patentschrift **EP 0 603 207 B** zu finden, auf die ausdrücklich verwiesen wird und deren das SKET-Verfahren betreffende Offenbarung als Bestandteil der Offenbarung des vorliegenden Textes verstanden wird.

Nach einer weiteren Ausgestaltung des erfindungsgemäßen Verfahrens können die Entschäumerzusammensetzungen nach dem sogenannten Fließbettverfahren hergestellt werden. Hierbei werden die entschäumend wirkenden Verbindungen auf das vorzugsweise feste Vorprodukt unter gleichzeitigem Trocknen und Granulieren in einer Wirbelschicht oberhalb einer mit Durchtrittsöffnungen für die Trocknungsluft versehenen rechteckigen Anströmfläche aufgesprüht, wobei das zu trocknende Produkt während der Trocknungsphase vorzugsweise kontinuierlich pneumatisch weiterbefördert wird. Geeignete Apparate für das Fließbettverfahren werden beispielsweise im Markt von den Firmen Sulzer, Heinen, Gea oder Babcock angeboten.

Nach einer weiteren Ausgestaltung des erfindungsgemäßen Verfahrens zur Herstellung der Entschäumerzusammensetzungen erfolgt die gleichzeitige Trocknung und Granulierung in einem vorzugsweise horizontal angeordneten Dünnschichtverdampfer mit rotierenden Einbauten, wie er z.B. von der Firma VRV unter der Bezeichnung "Flashdryer" vertrieben wird. Hierbei handelt es sich, vereinfacht dargestellt, um ein Rohr, das über mehrere Zonen hinweg unterschiedlich temperiert werden kann. Über eine oder mehrere Wellen, die mit Blättern oder Flugscharen als rotierende Einbauten versehen sind, wird das Trägermaterial eindosiert, mit der über eine oder mehrere Düsen eingesprühten entschäumend wirkenden Verbindung besprüht und gegen die beheizte Wandung geschleudert, an der die Trocknung in einer dünnen Schicht von typischerweise 1 bis 10 mm Stärke erfolgt.

Die erfindungsgemäßen Entschäumerzusammensetzungen weisen eine Teilchengröße von 50µm bis 3mm vorzugsweise 0,1 mm bis 2 mm, insbesondere 0,2 bis 1,8 oder 0,4 bis 1,4 oder 0,6 bis 1,2 mm oder 0,8 bis 1 mm auf. Unter dem Begriff "Teilchengröße" wird in Rahmen der vorliegenden Erfindung der üblicherweise als d50 bezeichneter Wert der mittleren Teilchengröße verstanden. Geeignete Verfahren zur Bestimmung dieses Werts sind dem Fachmann bekannt, Beispiele für geeignete Methoden sind beispielsweise Lichtmikroskopie, Elektronenmikroskopie, Siebverfahren oder Sedimentationsverfahren, insbesondere jedoch die Volumenverteilung (Meßmethode: Coulter Counter).

Wie bereits oben beschrieben wurde, lassen sich die erfindungsgemäßen Entschäumerzusammensetzungen nun nur durch Verfahren herstellen bei denen gewährleistet ist, daß die oben beschriebenen Komponenten auf getrennten Partikeln vorliegen. Grundsätzlich lassen sich daher die einzelnen, an einer erfindungsgemäßen Entschäumerzusammensetzungen beteiligten Feststoffe zwar nach den oben genannten Verfahren herstellen, die erfindungsgemäße Entschäumerzusammensetzung wird jedoch abschließend durch Vermischen entsprechender Mengen an Feststoffpartikeln, wie sie beispielsweise nach dem obengenannten Verfahren erhältlich sind, erhalten. Dieses Vermischen kann grundsätzlich nach einem beliebigen Verfahren erfolgen, bei denen gewährleistet ist, daß ein im wesentlichen homogenes Gemisch der einzelnen Komponenten der erfindungsgemäße Entschäumerzusammensetzung resultiert.

Bevorzugte Mischgeräte zur Einarbeitung der entschäumend wirksamen Verbindungen in die erfindungsgemäßen Entschäumerzusammensetzungen sind die sogenannten Freifallmischer.

Gegenstand der vorliegenden Erfindung ist daher auch ein Verfahren zur Herstellung einer erfindungsgemäßen Entschäumerzusammensetzung, bei dem jeweils mindestens ein teilchenförmiger Feststoff, der als Wirkstoffkomponente mindestens eine entschäumend wirkende Verbindung auf Paraffinbasis enthält und mindestens ein teilchenförmiger Feststoff, der als Wirkstoffkomponente mindestens eine entschäumend wirkende Verbindung auf Silikonbasis enthält, vermischt werden, wobei mindestens eine Sorte teilchenförmiger Feststoff eine Wirkstoffkomponente der anderen Sorte teilchenförmiger Feststoff nicht enthält.

Die erfindungsgemäßen Entschäumerzusammensetzungen können beispielsweise durch Vermischen kommerziell erhältliche Produkte hergestellt werden. Hierzu sind beispielsweise die Produkte Dehydran ® 750, Dehydran ® 751, Dehydran ® 760 und Dehydran ® 770 (Hersteller: Firma Cognis Deutschland GmbH, Düsseldorf) geeignet. Dehydran ® 750 und Dehydran ® 751 sind Entschäumerpulver, die 8 -10 Gew.-% Silikonöl auf Sulfat/Silikat als Trägermaterial enthalten. Dehydran ® 760 ist ein Entschäumerpulver, das ein Gemisch aus 2 - 4 Gew.-% Silikonöl und 6 bis 12 Gew.-% Paraffin (Verhältnis 1 : 3) auf Sulfat/Silikat als Trägermaterial enthält. Dehydran ® 770 ist ein Entschäumerpulver, das 15 Gew.-% Paraffin auf Sulfat/Silikat als Trägermaterial enthält.

Die nach den erfindungsgemäßen Verfahren hergestellten Entschäumerzusammensetzungen zeigen eine gute entschäumende Wirkung und sind sowohl in sprühgetrockneten, in granulierten als auch in stückigen Waschmitteln einsetzbar, d.h. auch in Waschmitteltabletten,

Ein weiterer Gegenstand der vorliegenden Erfindung betrifft daher die Verwendung der erfindungsgemäßen Entschäumerzusammensetzungen zur Herstellung von festen Waschmitteln.

Ein weiterer Gegenstand der vorliegenden Erfindung sind wasch- und reinigungsaktive Zusammensetzungen, beispielsweise Waschmittel, die eine erfindungsgemäße Entschäumerzusammensetzung enthalten.

Die erfindungsgemäßen wasch- und reinigungsaktiven Zusammensetzungen enthalten die erfindungsgemäße Entschäumerzusammensetzung in einer Menge von 0,05 bis 20 Gew.-%, beispielsweise 0,5 bis 10 oder 1 bis 5 Gew.-%.

Im Rahmen einer bevorzugten Ausführungsform der vorliegenden Erfindung enthält eine erfindungsgemäße wasch- und reinigungsaktive Zusammensetzung die erfindungsgemäße Entschäumerzusammensetzung in einer Menge, bei der das Verhältnis von zur gewünschten Entschäumung benötigten Menge an Entschäumerzusammensetzung bei 40°C zu zur gewünschten Entschäumung benötigten Menge an Entschäumerzusammensetzung bei 95°C mehr als 0,6 bis weniger als 1,8 beträgt.

Die Entschäumerzusammensetzungen können in den erfindungsgemäßen Waschmitteln in Mengen von 0,2 bis 7,0 Gew.-%, bevorzugt in Mengen von 0,5 bis 4,0 Gew.-% - bezogen auf Waschmittel - enthalten sein. Des weiteren können die Waschmittel übliche anionische, nichtionische oder kationische Tenside, sowie weitere übliche Bestandteile in üblichen Mengen enthalten. Als übliche Bestandteile können die Waschmittel Enthärter wie Tripolyphosphat oder Zeolith, sowie ggf. Bleichmittel wie Perborat oder Percarbonat in üblichen Mengen enthalten. Die Entschäumergranulate können auf einfache Weise untergemischt werden.

Als nichtionische Tenside eignen sich in den erfindungsgemäßen Waschmitteln beispielsweise Fettalkoholalkoxylate, die durch Druckspaltung von pflanzlichen Fetten und Ölen in Fettsäuren bzw. durch nachfolgende Veresterung oder direkte Umesterung mit Methanol in die Fettsäuremethylester und anschließender selektiver Hydrierung zu Fettalkoholen, unter Erhalt der Doppelbindungen, und nachfolgender Alkoxylierung, vorzugsweise Ethoxylierung erhältlich sind. Fettalkoholethoxylate werden durch Ethoxylierung von Fettalkoholen R¹-OH auf pflanzlicher Basis, wie in der **EP 370 273 B1** beschrieben, oder aus Oxoalkoholen hergestellt.

Der Alkenylrest R¹ kann sich von primären ungesättigten Alkoholen ableiten. Typische Beispiele ungesättigter Alkohole sind Undecen-1-ol, Lauroleinalkohol, Myristoleinalkohol, Palmitoleinalkohol, Petroselaidinalkohol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol, Palmoleylalkohol, Petroselinylalkohol, Arachylalkohol, sowie deren Mischungen und Gemischen aus ungesättigten und gesättigten Fettalkohlen, die durch die in der **EP 0 724 555 B1** beschriebenen Verfahren erhalten wurden.

Bevorzugt handelt es sich bei den Fettalkoholen auf pflanzlicher Basis um Verbindungen, die im Wesentlichen, d.h. mindestens zu 10 Gew.-% ungesättigt sind, und Jodzahlen von 20 bis 130, vor zugsweise 20 bis 110, insbesondere 20 bis 85 und einen Konjuengehalt kleiner 4,5 Gew.-%, vorzugsweise 6 Gew.-% aufweisen.

Weiterhin bevorzugt im Sinne der Erfindung werden solche Fettalkoholalkoxylate, die sich von einwertigen, ungesättigten Alkoholen der Formel R¹-OH mit 6 bis 22 Kohlenstoffatomen, insbesondere mit 6 bis 18 Kohlenstoffatomen ableiten.

Die Fettalkohole werden in Form ihrer Alkoxylate eingesetzt, die durch Umsetzung mit 1 bis 50 Mol 1,2-Epoxyalkanen (CH₂OCHR²), vorzugsweise 2 bis 35 Mol und bevorzugt 3 bis 25 Mol erhalten werden, wobei R² für Wasserstoff oder einen Methyl- oder einen Ethylrest steht. Vorzugsweise werden Fettalkoholethoxylate (R² = Wasserstoff), die durch Umsetzung mit 1 bis 50 Mol Ethylenoxid, bevorzugt 2 bis 35 Mol, insbesondere 3 bis 25 Mol entstanden sind, eingesetzt. Insbesondere bevorzugt sind Fettalkoholethoxylate mit einem Ethoxylierungsgrad zwischen 50 und 60 Gew.-% Ethylenoxid.

Die Alkoxylierung erfolgt in Gegenwart von Katalysatoren, vorzugsweise alkalischen Katalysatoren wie Natriummethanolat, Natriumhydroxid und Kaliumhydroxid.

Typische Beispiele für im Rahmen der erfindungsgemäßen Waschmittel geeignete anionische Tenside sind Seifen, Alkylbenzolsulfonate, sekundäre Alkansulfonate, Olefinsulfonate, Alkylethersulfonate, Glycerinethersulfonate, α-Methylestersulfonate, Sulfofettsäuren, Alkyl- und/oder Alkenylsulfate, Alkylethersulfate, Glycerinethersulfate, Hydroxymischethersulfate, Fettalkohol(ether)phosphate, Monoglycerid(ether)sulfate, Fettsäureamid(ether)sulfate, Mono- und Dialkylsulfosuccinate, Mono-und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, Acyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

Bevorzugt sind anionische Tenside ausgewählt aus der Gruppe, die gebildet wird von Alkyl-und/oder Alkenylsulfate, Alkylethersulfate, Alkylbenzolsulfonate, Seifen, Monoglycirid(ether)sulfate und Alkansulfonate, insbesondere Fettalkoholsulfate, Fettalkoholethersulfate, sekundäre Alkansulfonate und lineare Alkylbenzolsulfonate.

Vorzugsweise enthalten die erfindungsgemäßen Wasch- und Reinigungsmittel 0,1 bis 89 Gew.-%, vorzugsweise 0,2 bis 85 Gew.-%, insbesondere 0,5 bis 70 Gew.-% anionische Tenside, berechnet als Aktivsubstanz, bezogen auf die Mittel.

Unter Alkyl- und/oder Alkenylsulfaten, die auch häufig als Fettalkoholsulfate bezeichnet werden, sind die Sulfatierungsprodukte primärer Alkohole zu verstehen, die der Formel (II) folgen,

**R**^{**3**}**O-SO**_{**3**}**X** (II)

in der R¹⁶ für einen linearen oder verzweigten, aliphatischen Alkyl- und/oder Alkenylrest mit 6 bis 22, vorzugsweise 12 bis 18 Kohlenstoffatomen und X für ein Alkali- und/oder Erdalkalimetall, Ammonium, Alkylammonium, Alkanolammonium oder Glucammonium steht.

Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelen'schen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

### Alkylethersulfate

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Im Sinne der Erfindung kommen Ethersulfate in Betracht, die der Formel (III) folgen,

R⁴O-(CH₂CH₂O)ₐSO₃X (III)

in der R¹⁷ für einen linearen oder verzweigten Alkyl- und/oder Alkenylrest mit 6 bis 22 Kohlenstoffatomen, a für Zahlen von 1 bis 10 und X für ein Alkali- und/oder Erdalkalimetall, Ammonium, Alkylammonium, Alkanolammonium oder Glucammonium steht. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

### Alkylbenzolsulfonate

Alkylbenzolsulfonate folgen vorzugsweise der Formel (IV),

**R**^{**5**}**-Ph-SO**_{**3**}**X** (IV)

in der R⁵ für einen verzweigten, vorzugsweise jedoch linearen Alkylrest mit 10 bis 18 Kohlenstoffatomen, Ph für einen Phenylrest und X für ein Alkali- und/oder Erdalkalimetall, Ammonium, Alkylammonium, Alkanolammonium oder Glucammonium steht. Vorzugsweise werden Dodecylbenzolsulfonate, Tetradecylbenzolsulfonate, Hexadecylbenzolsulfonate sowie deren technische Gemische in Form der Natriumsalze eingesetzt.

### Seifen

Unter Seifen sind schließlich Fettsäuresalze der Formel (V) zu verstehen,

**R**^{**6**}**CO-OX** (V)

in der R⁶CO für einen linearen oder verzweigten, gesättigten oder ungesättigten Acylrest mit 6 bis 22 und vorzugsweise 12 bis 18 Kohlenstoffatomen und wiederum X für Alkali- und/oder Erdalkali, Ammonium, Alkylammonium oder Alkanolammonium steht. Typische Beispiele sind die Natrium-, Kalium-, Magnesium-, Ammonium- und Triethanolammoniumsalze der Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Vorzugsweise werden Kokos- oder Palmkernfettsäure in Form ihrer Natrium- oder Kaliumsalze eingesetzt.

### Monoglycerid(ether)sulfate

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen [vgl. **EP 0 561 825 B1, EP 0 561 999 B1** (Henkel)]. Die neutralisierten Stoffe können - falls gewünscht - einer Ultrafiltration unterworfen werden, um den Elektrolytgehalt auf ein gewünschtes Maß zu vermindern [**DE 42 04 700 A1** (Henkel)]. Übersichten zur Chemie der Monoglyceridsulfate sind beispielsweise von **A. K. Biswas et al. in J.Am.Oil.Chem.Soc. 37, 171 (1960)** und **F. U. Ahmed J.Am.Oil.Chem.Soc. 67, 8 (1990)** erschienen. Die im Sinne der Erfindung einzusetzenden Monoglycerid(ether)sulfate folgen der Formel (VI), 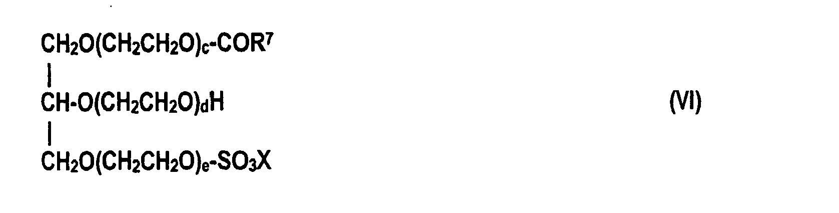 in der R⁷CO für einen linearen oder verzweigten Acylrest mit 6 bis 22 Kohlenstoffatomen, c, d und e in Summe für 0 oder für Zahlen von 1 bis 30, vorzugsweise 2 bis 10, und X für ein Alkali- oder Erdalkalimetall steht. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze. Vorzugsweise werden Monoglyceridsulfate der Formel **(VI)** eingesetzt, in der R⁷CO für einen linearen Acylrest mit 8 bis 18 Kohlenstoffatomen steht.

### Alkansulfonate

Alkansulfonate lassen sich in primäre und sekundäre Alkansulfonate einteilen. Darunter versteht man Verbindungen der Formel (VII), 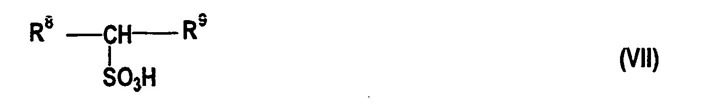 wobei bei primären Alkansulfonaten R⁸ für Wasserstoff und R⁹ für einen Alkylrest mit nicht mehr als 50 Kohlenstoffen steht. Bevorzugt sind die sekundären Alkansulfonate.
R²⁰ und R²¹ stehen für Alkylreste, wobei R⁸ und R⁹ zusammen nicht mehr als 50 Kohlenstoffatome haben sollen.

### Nichtionische Tenside

Die erfindungsgemäßen Wasch- und Reinigungsmittel können weitere nichtionische Tenside enthalten. Typische Beispiele für weitere nichtionische Tenside sind Alkoxylate von Alkanolen, endgruppenverschlossene Alkoxylate von Alkanolen ohne freie OH-Gruppen, alkoxylierte Fettsäureniedrigalkylester, Hydroxymischether, Alkylphenolpolyglycolether, Fettsäurepolyglycolester, Fettsäureamidpolyglykolether, Fettaminpolyglykolether, alkoxylierte Triglyceride, Mischether bzw. Mischformale, Alk(en)yloligoglykoside, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen.

Bevorzugt sind die weiteren nichtionische Tenside ausgewählt aus der Gruppe, die gebildet wird von Alkyl- und/oder Alkenyloligoglykoside, Hydroxymischethem, Alkoxylaten von Alkanolen, insbesondere Fettalkoholpolyethylenglykol/polypropylenglykolether (FAEO/PO) bzw. Fettalkoholpolypropylenglykol/polyethylenglykolether (FAPO/EO), endgruppenverschlossenen Alkoxylaten von Alkanolen, insbesondere endgruppenverschlossene Fettalkoholpolyethylenglykol/polypropylenglykolether bzw. endgruppenverschlossene Fettalkoholpolypropylenglykol/polyethylenglykolether, und Fettsäureniedrigalkylestern und Aminoxiden.

### Alkyl- und/oder Alkenyloligoglykoside

Bevorzugt Alkyl- und/oder Alkenyloligoglykoside eingesetzt, die der Formel (VIII) folgen,

**R**^{**10**}**O-[G]**_{**p**} **(VIII)**

in der R³ für einen Alkyl- und/oder Alkenylrest mit 4 bis 22 Kohlenstoffatomen, G für einen Zuckerrest mit 5 oder 6 Kohlenstoffatomen und p für Zahlen von 1 bis 10 steht. Sie können nach den einschlägigen Verfahren der präparativen organischen Chemie erhalten werden. Stellvertretend für das umfangreiche Schrifttum sei hier auf die Schriften **EP 0 301 298 A1** und **WO 90/03977** verwiesen. Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Die Indexzahl p in der allgemeinen Formel (VIII) gibt den Oligomerisierungsgrad (DP), d. h. die Verteilung von Mono- und Oligoglykosiden an und steht für eine Zahl zwischen 1 und 10. Während p in einer gegebenen Verbindung stets ganzzahlig sein muss und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest R¹⁰ kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden.

Bevorzugt sind Alkyloligoglucoside der Kettenlänge C₈-C₁₀ (DP = 1 bis 3), die als Vorlauf bei der destillativen Auftrennung von technischem C₈-C₁₈-Kokosfettalkohol anfallen und mit einem Anteil von weniger als 6 Gew.-% C₁₂-Alkohol verunreinigt sein können sowie Alkyloligoglucoside auf Basis technischer C_{9/11}-Oxoalkohole (DP = 1 bis 3). Der Alkyl- bzw. Alkenylrest R¹⁰ kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können. Bevorzugt sind Alkyloligoglucoside auf Basis von gehärtetem C_{12/14}-Kokosalkohol mit einem DP von 1 bis 3.

### Hydroxymischether

Weiterhin als Bestandteil der erfindungsgemäßen Wasch- oder Reinigungsmittel geeignet sind Hydroxymischether der Formel (IX)

**R**^{**11**}**O[CH**_{**2**}**CHR**^{**12**}**O]**_{**b**}**[CH**_{**2**}**CHR**^{**13**}**O]**_{**y**}**CR**^{**14**}**HCH(OH)R**^{**15**} **(IX)**

in der R¹¹ für Alkyl- und/oder Alkenylrest mit 4 bis 22 Kohlenstoffatomen, R¹² für Wasserstoff oder einen Methyl- oder Ethylrest, R¹³ für Wasserstoff oder einen Methyl- oder Ethylrest, R¹⁴ für Wasserstoff oder einen Alkylrest mit 2 bis 18 Kohlenstoffatomen und R¹⁵ für einen Alkylrest mit 2 bis 22 Kohlenstoffatomen steht. Dabei steht b für 0 oder Zahlen von 1 bis 30, y für 0 oder Zahlen von 1 bis 30, wobei die Summe aus x und y größer/gleich 1 sein soll.

Hydroxymischether der Formel (IX) sind literaturbekannt und werden beispielsweise in der deutschen Anmeldung DE 19738866 beschrieben. Hydroxymischether können Ringöffnungsprodukte von sowohl innenständigen Olefinen (R¹⁴ ungleich Wasserstoff) oder entständigen Olefinen (R¹⁴ gleich Wasserstoff) sein, wobei letztere bevorzugt sind. Sie werden hergestellt durch Umsetzung von 1,2-Epoxyalkanen (R¹⁵CHOCR¹⁴H), wobei R¹⁴ für Wasserstoff, R¹⁵ für einen aliphatischen gesättigten, geradkettigen oder verzweigten Alkylrest mit 2 bis 22, insbesondere 6 bis 16 Kohlenstoffatomen steht, mit Alkoholen, die alkoxyliert worden sind.

Bevorzugt im Sinne der Erfindung werden solche Hydroxymischether, die sich von Alkoxylaten von einwertigen Alkoholen der Formel R¹¹-OH mit 4 bis 18 Kohlenstoffatomen ableiten, wobei R¹¹ für einen aliphatischen, gesättigten, geradkettigen oder verzweigten Alkylrest, insbesondere mit 6 bis 16 Kohlenstoffatomen, und R¹⁴ für Wasserstoff steht.

Beispiele für geeignete geradkettige Alkohole sind Butanol-1, Capron-, Önanth-, Capryl-, Pelargon-, Caprinalkohol, Undecanol-1, Laurylalkohol, Tridecanol-1, Myristylalkohol, Pentadecanol-1, Palmitylalkohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestem auf Basis von Fetten und Ölen anfallen. Beispiele für derartige verzweigte Alkohole sind so genannte Oxoalkohole, die meist 2 bis 4 Methylgruppen als Verzweigungen tragen und nach dem Oxoprozess hergestellt werden und so genannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole werden in Form ihrer Alkoxylate eingesetzt, die durch Umsetzung der Alkohole in beliebiger Reihenfolge mit Ethylenoxid, Propylenoxid und/oder Butylenoxid auf bekannte Weise hergestellt werden. In einer bevorzugten Ausführungsform werden Alkoxylate von Alkoholen, die durch Umsetzung mit 10 bis 50 Mol Ethylenoxid entstehen eingesetzt, wobei R¹², R¹³ und R¹⁴ für Wasserstoff steht und b+y=1-50 ist. Eine weitere Ausführungsform beschreibt sowohl Alkoxylate, die durch Umsetzung von Alkohol mit 1 bis 10 Mol Propylenoxid (R¹²=Methyl, b=1-10) und 10 bis 30 Mol Ethylenoxid (R¹³=Wasserstoff, y=10-30) entstehen, und auch durch Umsetzung mit 10 bis 30 Mol Ethylenoxid (R¹²=Wasserstoff, b=10-30) und 1 bis 10 Mol Propylenoxid (R¹³=Methyl, y=1-10) entstehen, wobei R¹⁴ jeweils für Wasserstoff steht.

### Fettalkoholpolyethylenglykollpolypropylenqlykolether

In einer bevorzugten Ausführungsform sind Fettalkoholpolyethylenglykol/polypropylenglykolether der Formel (X), die gegebenenfalls endgruppenverschlossen sind,

R¹⁶O(CH₂CH₂O)ₙ[CH₂(CH₃)CHO]ₘR¹⁷ (X)

enthalten, in der R¹⁶ für einen Alkyl- und/oder Alkenylrest mit 8 bis 22 C-Atomen, R¹⁷ für H oder einen Alkylrest mit 1 bis 8 C-Atomen, n für eine Zahl von 1 bis 40, vorzugsweise 1 bis 30, insbesondere 1 bis 15, und m für 0 oder eine Zahl von 1 bis 10 steht.

### Fettalkoholpolypropylenglykol/polyethylenglykolether

Ebenso geeignet sind Fettalkoholpolypropylenglykol/polyethylenglykolether der Formel (XI), die gegebenenfalls endgruppenverschlossen sind,

**R**^{**18**}**O[CH**_{**2**}**(CH**_{**3**}**)CHO]**_{**q**}**(CH**_{**2**}**CH**_{**2**}**O)**_{**r**}**R**^{**19**} **(XI)**

in der R¹⁸ für einen Alkyl- und/oder Alkenylrest mit 8 bis 22 C-Atomen, R¹⁹ für H oder einen Alkylrest mit 1 bis 8 C-Atomen, q für eine Zahl von 1 bis 5 und r für eine Zahl von 0 bis 15 steht.

Einer bevorzugten Ausführungsform entsprechend enthalten die erfindungsgemäßen Mittel Fettalkoholpolyethylenglykol/polypropylenglykolether der Formel (X), in der R¹⁶ für einen aliphatischen, gesättigten, geradkettigen oder verzweigten Alkylrest mit 8 bis 16 C-Atomen, n für eine Zahl von 1 bis 10, und m für 0 und R¹⁷ für Wasserstoff steht. Es handelt sich hierbei um Anlagerungsprodukte von 1 bis 10 Mol Ethylenoxid an monofunktionelle Alkohole. Als Alkohole sind die oben beschriebenen Alkohole wie Fettalkohole, Oxoalkohole und Guerbetalkohole geeignet. Ebenfalls geeignet sind von solchen Alkoholethoxylaten solche, die eine eingeengte Homologenverteilung aufweisen. Weitere geeignete Vertreter von nicht endgruppenverschlossenen Vertretern sind solche der Formel (X), in der R¹⁶ für einen aliphatischen, gesättigten, geradkettigen oder verzweigten Alkylrest mit 8 bis 16 C-Atomen, n für eine Zahl von 2 bis 7, m für eine Zahl von 3 bis 7 und R¹⁷ für Wasserstoff steht. Es handelt sich hierbei um Anlagerungsprodukte von zunächst mit 2 bis 7 Mol Ethylenoxid und dann mit 3 bis 7 Mol Propylenoxid alkoxylierten monofunktionellen Alkohole der schon beschriebenen Art.

Die endgruppenverschlossenen Verbindungen der Formel (X) sind mit einer Alkylgruppe mit 1 bis 8 C-Atomen verschlossen (R¹⁷). Häufig werden derartige Verbindungen in der Literatur auch als Mischether bezeichnet. Geeignete Vertreter sind Methylgruppenverschlossene Verbindungen der Formel (X), in denen R¹⁶ für einen aliphatischen, gesättigten, geradkettigen oder verzweigten Alkylrest mit 8 bis 16 C-Atomen, n für eine Zahl von 2 bis 7, m für eine Zahl von 3 bis 7 und R⁷ für eine Methylgruppe steht. Derartige Verbindungen können leicht durch Umsetzung der entsprechenden nicht endgruppenverschlossenen Fettalkoholpolyethylenglykollpolypropylenglykolether mit Methylchlorid in Gegenwart einer Base hergestellt werden.

Weitere geeignete Vertreter von Alkylgruppenverschlossenen Verbindungen sind solche der Formel (X), in denen R¹⁶ für einen aliphatischen, gesättigten, geradkettigen oder verzweigten Alkylrest mit 8 bis 16 C-Atomen, n für eine Zahl von 5 bis 15, m für 0 und R¹⁷ für eine Alkylgruppe mit 4 bis 8 C-Atomen steht. Bevorzugt wird der Endgruppenverschluss mit einer geradkettigen oder verzweigten Butylgruppe durchgeführt, indem der entsprechende Fettalkoholpolyethylenglykolether mit n-Butylchlorid oder mit tert. Butylchlorid in Gegenwart von Basen umgesetzt wird.

Anstelle der Verbindungen der Formel (X) oder in Mischung mit ihnen können gegebenenfalls endgruppenverschlossene Fettalkoholpolypropylenglykol/polyethylenglykolether der Formel (XI) enthalten sein. Derartige Verbindungen werden beispielsweise in der deutschen Offenlegungsschrift **DE 43 23 252 A1** beschrieben. Besonders bevorzugte Vertreter der Verbindungen der Formel (XI) sind solche, in denen R¹⁸ für einen aliphatischen, gesättigten, geradkettigen oder verzweigten Alkylrest mit 8 bis 16 C-Atomen, q für eine Zahl von 1 bis 5, r für eine Zahl von 1 bis 6 und R¹⁹ für Wasserstoff steht. Es handelt sich hierbei vorzugsweise um Anlagerungsprodukte von 1 bis 5 Mol Propylenoxid und von 1 bis 6 Mol Ethylenoxid an monofunktionelle Alkohole, die bereits im Zusammenhang mit den Hydroxymischethern als geeignet beschrieben worden sind.

### Alkoxylierte Fettsäureniedrigalkylester

Als alkoxylierte Fettsäureniedrigalkylester kommen Tenside der Formel (XII) in Betracht,

**R**^{**20**}**CO-(OCH**_{**2**}**CHR**^{**21**}**)**_{**w**}**OR**^{**22**} **(XII)**

in der R²⁰CO für einen linearen oder verzweigten, gesättigten und/oder ungesättigten Acylrest mit 6 bis 22 Kohlenstoffatomen, R²¹ für Wasserstoff oder Methyl, R²² für lineare oder verzweigte Alkylreste mit 1 bis 4 Kohlenstoffatomen und w für Zahlen von 1 bis 20 steht. Typische Beispiele sind die formalen Einschubprodukte von durchschnittlich 1 bis 20 und vorzugsweise 5 bis 10 Mol Ethylen-und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestern.

### Aminoxide

Als Aminoxide können Verbindungen der Formel (XIII) und/oder eingesetzt werden.

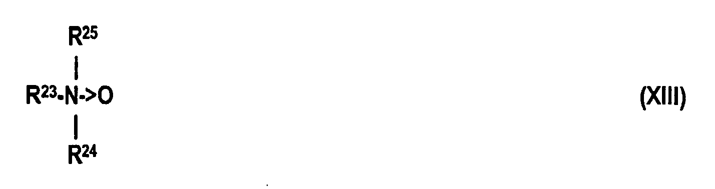

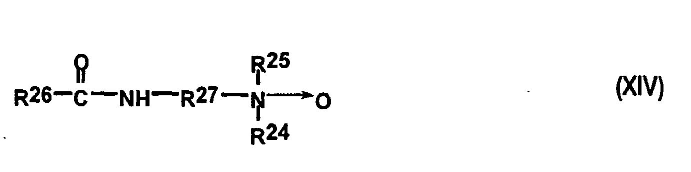

Bei der Herstellung der Aminoxide der Formel (XIII) geht man von tertiären Fettaminen aus, die mindestens einen langen Alkylrest aufweisen, und oxidiert sie in Gegenwart von Wasserstoffperoxid. Bei den im Sinne der Erfindung in Betracht kommenden Aminoxiden der Formel (XIII), steht R²³ für einen linearen oder verzweigten Alkylrest mit 6 bis 22, vorzugsweise 12 bis 18 Kohlenstoffatomen, sowie R²⁴ und R²⁵ unabhängig voneinander für R²³ oder einen gegebenenfalls hydroxysubstituierten Alkylrest mit 1 bis 4 Kohlenstoffatomen. Vorzugsweise werden Aminoxide der Formel (XIII) eingesetzt, in der R²³ und R²⁴ für C_{12/14}- bzw. C_{12/18}-Kokosalkylreste stehen und R²⁵ einen Methyl-oder einen Hydroxyethylrest bedeutet. Ebenfalls bevorzugt sind Aminoxide der Formel (XIII), in denen R²³ für einen C_{12/14}- bzw. C_{12/18}- Kokosalkylrest steht und R²⁴ und R²⁵ die Bedeutung eines Methyl- oder Hydroxyethylrestes haben.

Weitere geeignete Aminoxide sind Alkylamido-aminoxide der Formel (XIV), wobei der Alkylamido-Rest R²⁶CONH durch die Reaktion von linearen oder verzweigten Carbonsäuren, vorzugsweise mit 6 bis 22, bevorzugt mit 12 bis 18 Kohlenstoffatomen, insbesondere aus C_{12/14}- bzw. C_{12/18}- Fettsäuren mit Aminen entsteht. Dabei stellt R²⁷ eine lineare oder verzweigte Alkenylgruppe dar mit 2 bis 6, vorzugsweise 2 bis 4 Kohlenstoffatomen und R²⁴ und R²⁵ haben die in Formel (XIII) angegebene Bedeutung.

In einer bevorzugten Ausführungsform enthalten die erfindungsgemäßen Wasch- und Reinigungsmittel 0,1 bis 89 Gew.-%, vorzugsweise 0,2 bis 85 Gew.-%, insbesondere 0,5 bis 70 Gew.-% weitere nichtionische Tenside, berechnet als Aktivsubstanz, bezogen auf die Mittel.

### Sprengmittel

In einer bevorzugten Ausführungsform enthalten die erfindungsgemäßen Wasch- und Reinigungsmittel Sprengmittel. Unter dem Begriff "Sprengmittel" sind Stoffe zu verstehen, die in den Wasch-und Reinigungsmitteln enthalten sind, um deren Zerfall beim Inkontaktbringen mit Wasser zu beschleunigen. Übersichten hierzu finden sich z.B. in **J.Pharm.Sci. 61 (1972)** oder **Römpp Chemielexikon**, **9. Auflage, Band 6, S. 4440.** Die Sprengmittel können im Granulat makroskopisch betrachtet homogen verteilt vorliegen, können mikroskopisch gesehen jedoch herstellungsbedingt Zonen erhöhter Konzentration bilden. Zu den bevorzugten Sprengmitteln gehören Polysaccharide, wie z.B. natürliche Stärke und deren Derivate (Carboxymethylstärke, Stärkeglycolate in Form ihrer Alkalisalze, Agar Agar, Guar Gum, Pektine usw.), Cellulosen und deren Derivate (Carboxymethylcellulose, mikrokristalline Cellulose), Polyvinylpyrrolidon, Kollidon, Alginsäure und deren Alkalisalze (Alginate), amorphe oder auch teilweise kristalline Schichtsilicate (Bentonite), Polyurethane, Polyethylenglycole sowie gaserzeugende Systeme. Weitere Sprengmittel, die im Sinne der Erfindung zugegen sein können, sind beispielsweise den Druckschriften **WO 98/40462** (Rettenmeyer), **WO 98/55583 und WO 98/55590** (Unilever) und **WO 98/40463, DE 197 09 991** und **DE 197 10 254** (Henkel) zu entnehmen. Auf die Lehre dieser Schriften wird ausdrücklich Bezug genommen. Zur Herstellung der erfindungsgemäßen Granulate kann man die Tenside und die Sprengmittel - jeweils bezogen auf den Feststoffgehalt (Reinstoffgehalt) - im Gewichtsverhältnis 1:10 bis 10:1, vorzugsweise 1:5 bis 5:1 und insbesondere 1:2 bis 2:1 einzusetzen. Es empfiehlt sich weiterhin, den Wassergehalt der Sprengmittel bzw. der Wasch- und Reinigungsmittel so einzustellen, dass bei Lagerung nicht automatisch eine Quellung einsetzt. Vorzugsweise sollte der Restwassergehalt 10 Gew.-% nicht übersteigen.

Weitere bevorzugte Inhaltsstoffe solcher Waschmittel, die unter Verwendung der erfindungsgemäßen Waschmittelzusatzstoffe erhältlich sind, sind anorganische und organische Buildersubstanzen, wobei als anorganische Buildersubstanzen hauptsächlich Zeolithe, kristalline Schichtsilikate und amorphe Silicate mit Bildereigenschaften sowie - wo zulässig - auch Phosphate, beispielsweise Tripolyphosphate, zum Einsatz kommen. Die Buildersubstanzen sind vorzugsweise in den erfindungsgemäßen Waschmitteln in Mengen von etwa 10 bis etwa 60 Gew.-%, bezogen auf das gesamte Waschmittel, enthalten

Der als Waschmittelbuilder häufig eingesetzte Zeolith ist vorzugsweise Zeolith A und/oder P. als Zeolith P wird beispielsweise Zeolith MAP® (Handelsprodukt der Firma Crosfield) besonders bevorzugt. Geeignet sind jedoch auch Zeolith X sowie Gemische, die zwei oder mehr Zeolithe ausgewählt aus der Gruppe bestehend aus Zeolith A, X, P oder Y enthalten. Von besonderem Interesse ist auch ein cokristallisiertes Natrium/Kalium-Aluminiumsilikat aus Zeolith A und Zeolith X, welches als VEGOBOND AX® (Handelsprodukt der Firma Condea Augusta S.p.A.) im Handel erhältlich ist. Der Zeolith kann als sprühgetrocknetes Pulver oder auch als ungetrocknete, von ihrer Herstellung noch feuchte, stabilisierte Suspension zum Einsatz kommen. Für den Fall, daß der Zeolith als Suspension eingesetzt wird, kann diese geringe Zusätze an nichtionischen Tensiden als Stabilisatoren enthalten, beispielsweise 1 bis 3 Gew.-%, bezogen auf Zeolith, an ethoxylierten C₁₂-C₁₈-Fettalkoholen mit 2 bis 5 Ethylenoxidgruppen, C₁₂-C₁₄-Fettalkoholen mit 4 bis 5 Ethylenoxidgruppen oder ethoxylierten Isotridecanolen.

Geeignete Zeolithe weisen eine mittlere Teilchengröße von weniger als 10 µm (Volumenverteilung; Meßmethode: Coulter Counter) auf und enthalten vorzugsweise 18 bis 22 Gew.-%, insbesondere 20 bis 22 Gew.-% an gebundenem Wasser.

Geeignete Substitute bzw. Teilsubstitute für Phosphate und Zeolithe sind kristalline, schichtförmige Natriumsilikate der allgemeinen Formel NaMSiₓO2ₓ₊₁*yH₂O, wobei M Natrium oder Wasserstoff bedeutet, x eine Zahl von 1,9 bis 4 und y eine Zahl von 0 bis 20 ist und bevorzugte Werte für x 2, 3 oder 4 sind. Derartige kristalline Schichtsilikate werden beispielsweise in der europäischen Patentanmeldung **EP 0 164 514 A1** beschrieben. Brauchbare Schichtsilicate sind beispielsweise aus **US 3,966,629, US 4,062,647, EP 0 026 529 A1** und **EP 0 028 432 A1** bekannt, wobei die Offenbarung der genannten Druckschriften im Hinblick auf kristalline Schichtsilikate als Bestandteil der Offenbarung des vorliegenden Texts angesehen wird. Vorzugsweise werden Schichtsilicate eingesetzt, die aufgrund einer Alkalibehandlung weitgehend frei von Calciumionen und stark färbenden Eisenionen sind.

Zu geeigneten Buildersubstanzen gehören auch amorphe Natriumsilikate mit einem Modul Na₂O : SiO₂ von 1 : 2 bis 1 : 3,3, vorzugsweise von 1:2 bis 1: 2,8 und insbesondere von 1 : 2 bis 1 : 2,6, welche löseverzögert sind und Sekundärwascheigenschaften aufweisen. Im Rahmen des vorliegenden Textes wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Derartige sogenannte röntgenamorphe Silikate, welche ebenfalls eine Löseverzögerung gegenüber den her kömmlichen Wassergläsern aufweisen, werden beispielsweise in der deutschen Patentanmeldung DE 4400024 A1 beschrieben, deren Offenbarung im Hinblick auf röntgenamorphe Silicate als Bestandteil der Offenbarung des vorliegenden Textes betrachtet wird.

Selbstverständlich ist auch ein Einsatz der allgemein bekannten Phosphate als Buildersubstanzen möglich, sofern ein derartiger Einsatz nicht aus ökologischen Gründen vermieden werden sollte. Geeignet sind insbesondere die Natriumsalze der Orthophosphate, der Pyrophosphate und insbesondere der Tripolyphosphate. Ihr Gehalt beträgt im allgemeinen nicht mehr als 25 Gew.-%, vorzugsweise nicht mehr als 20 Gew.-%, jeweils bezogen auf das fertige Mittel.

Geeignete organische Gerüstsubstanzen sind beispielsweise die in Form ihrer Natriumsalze einsetzbaren Polycarbonsäuren, wie Citronensäure, Adipinsäure, Bernsteinsäure, Glutarsäure, Weinsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln.

Weitere geeignete organische Buildersubstanzen sind Dextrine, beispielsweise Oligomere bzw. Polymere von Kohlenhydraten, die durch partielle Hydrolyse von Stärken erhalten werden können.

Vorzugsweise handelt es sich um Hydrolyseprodukte mit mittleren Molmassen im Bereich von 400 bis 500 000. Ein bevorzugtes Dextrin ist in der britischen Patentanmeldung **GB 94 19 091 A1** beschrieben.

Weitere geeignete Cobuilder sind Oxydisuccinate und andere Derivate von Disuccinaten, vorzugsweise Ethylendiamindisuccinat. Besonders geeignet sind in diesem Zusammenhang auch Glycerindisuccinate und Glycerintrisuccinate, wie sie beispielsweise in den US-amerikanischen Patentschriften **US 4,524,009, US 4,639,325,** in der europäischen Patentanmeldung **EP 0 150 930 A1** und der japanischen Patentanmeldung JP 93/339896 beschrieben werden, auf die hier ausdrücklich verwiesen wird und deren Offenbarung im Hinblick auf Oxydisuccinate und andere Derivate von Disuccinaten als Bestandteil der Offenbarung des vorliegenden Textes gilt.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten. Derartige Cobuilder werden beispielsweise in der internationalen Patentanmeldung WO 95/20029 beschrieben, auf die ausdrücklich verwiesen wird und deren Offenbarung im Hinblick auf acetylierte Hydroxycarbonsäuren als Bestandteil der Offenbarung des vorliegenden Textes gilt.

Geeignete polymere Polycarboxylate sind beispielsweise die Natriumsalze der Polyacrylsäure oder der Polymethacrylsäure, beispielsweise solche mit einer relativen Molekülmasse von 800 bis 150000 (auf Säure bezogen und jeweils gemessen gegen Polystyrolsulfonsäure). Geeignete copolymere Polycarboxylate sind insbesondere solche der Acrylsäure mit Methacrylsäure und der Acrylsäure oder Methacrylsäure mit Maleinsäure. Insbesondere bevorzugt sind auch biologisch abbaubare Polymere aus mehr als zwei verschiedenen Monomereinheiten, beispielsweise solche, die gemäß der **DE 43 00 772 A1** als monomere Salze der Acrylsäure und der Maleinsäure sowie Vinylalkohol bzw. Vinylalkohol-Derivate oder gemäß der **DE 42 213 81 C2** als Monomere Salze der Acrylsäure und der 2-Alkylallylsulfonsäure sowie Zucker-Derivate enthalten. Weitere bevorzugte Copolymere sind solche, die in den deutschen Patentanmeldungen **DE 43 03 320 A1** und **DE 44 17 734 A1** beschrieben werden und als Monomere vorzugsweise Acrolein und Acrylsäure/Acrylsäuresalze bzw. Acrolein und Vinylacetat aufweisen. Auf die genannten Druckschriften wird ausdrücklich hingewiesen und die Offenbarung der genannten Druckschriften im Hinblick auf polymere Polycarboxylate wird als Bestandteil der Offenbarung des vorliegenden Textes betrachtet. Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, beispielsweise wie in der europäischen Patentanmeldung **EP 0 280 223 A1** beschrieben, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Zusätzlich können die Mittel auch Komponenten enthalten, welche die Öl- und Fett-Auswaschbarkeit aus Textilien positiv beeinflussen. Zu den bevorzugten öl- und fettlösenden Komponenten zählen beispielsweise nichtionische Celluloseether wie Methylcellulose undMethylhydroxypropylcellulose mit einem Anteil an Methoxyl-Gruppen von 15 bis 30 Gew.-% und an Hydroxypropoxyl-Gruppen von 1 bis 15 Gew.-%, jeweils bezogen auf den nichtionischen Celluloseether, sowie die aus dem Stand der Technik bekannten Polymere der Phthalsäure und/oder der Terephthalsäure bzw. von deren Derivaten, insbesondere Polymere aus Ethylenterephthalaten und/oder Polyethylenglykolterephthalaten oder anionisch und/oder nichtionisch modifizierten Derivaten von diesen. Besonders bevorzugt von diesen sind die sulfonierten Derivate der Phthalsäure- und der Terephthalsäure-Polymere.

Weitere geeignete Inhaltsstoffe der erfindungsgemäßen Waschmittel sind wasserlösliche anorganische Salze wie Bicarbonate, Carbonate, amorphe Silikate, normale Wassergläser, welche keine herausragenden Buildereigenschaften aufweisen, oder Mischungen aus diesen: insbesondere werden Alkalicarbonat und/oder amorphes Alkalisilikat, vor allem Natriumsilikat mit einem molaren Verhältnis Na20 : Si02 von 1:1 bis 1:4,5, vorzugsweise von 1:2 bis 1:3,5, eingesetzt. Der Gehalt in den erfindungsgemäßen Waschmitteln an Natriumcarbonat beträgt dabei vorzugsweise bis zu 40 Gew.-%, vorteilhafterweise zwischen 2 und 35 Gew.-%. Der Gehalt der Mittel an Natriumsilikat (ohne besondere Buildereigenschaften) beträgt im allgemeinen bis zu 10 Gew.-% und vorzugsweise zwischen 1 und 8 Gew.-%.

Außer den genannten Inhaltsstoffen können die Mittel weitere bekannte, in Waschmitteln üblicherweise eingesetzte Zusatzstoffe, beispielsweise Salze von Polyphosphonsäuren, optische Aufheller, Enzyme, Enzymstabilisatoren, geringe Mengen an neutralen Füllsalzen sowie Färb- und Duftstoffe, Trübungsmittel oder Perglanzmittel enthalten.

Unter den als Bleichmittel dienenden, in Wasser H₂O₂ liefernden Verbindungen haben das Natriumperborattetrahydrat und das Natriumperboratmonohydrat besondere Bedeutung.

Weitere brauchbare Bleichmittel sind beispielsweise Natriumpercarbonat, Peroxypyrophosphate, Citratperhydrate sowie H₂O₂ liefernde persaure Salze oder Persäuren, wie Perbenzoate, Peroxophthalate, Diperazelainsäure, Phthaloiminopersäure oder Diperdodecandisäure. Der Gehalt der Mittel an Bleichmitteln beträgt vorzugsweise 5 bis 35 Gew.-% und insbesondere bis 30 Gew.-%, wobei vorteilhafterweise Perboratmonohydrat oder Percarbonat eingesetzt wird.

Als Bleichaktivatoren können Verbindungen, die unter Perhydrolysebedingungen aliphatischePeroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O- und/oder N-Acylgruppen der genannten C-Atomzahl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat, 2,5-Diacetoxy-2,5-dihydrofuran und die aus den deutschen Patentanmeldungen **DE 196 16 693 A1** und **DE 196 16 767 A1** bekannten Enolester sowie acetyliertes Sorbitol und Mannitol beziehungsweise deren in der europäischen Patentanmeldung **EP 0 525 239 A1** beschriebene Mischungen (SORMAN), acylierte Zuckerderivate, insbesondere Pentaacetylglukose (PAG), Pentaacetylfruktose, Tetraacetylxylose und Octaacetyllactose sowie acetyliertes, gegebenenfalls N-alkyliertes Glucamin und Gluconolacton, und/oder N-acylierte Lactame, beispielsweise N-Benzoylcaprolactam, die aus den internationalen Patentanmeldungen **WO 94127970, WO 94128102, WO 94/28103**, **WO 95/00626, WO 95/14759** und **WO 95/17498** bekannt sind.

Die aus der deutschen Patentanmeldung **DE 196 16 769 A1** bekannten hydrophil substituierten Acylacetale und die in der deutschen Patentanmeldung **DE 196 16 770** sowie der internationalen Patentanmeldung **WO 95/14075** beschriebenen Acyllactame werden ebenfalls bevorzugt eingesetzt. Auch die aus der deutschen Patentanmeldung **DE 44 43 177 A1** bekannten Kombinationen konventioneller Bleichaktivatoren können eingesetzt werden. Auf die hier genannten Druckschriften wird dabei ausdrücklich hingewiesen und deren Offenbarung im Hinblick auf Bleichaktivatoren wird als Bestandteil der Offenbarung des vorliegenden Textes betrachtet.

Derartige Bleichaktivatoren sind im üblichen Mengenbereich, vorzugsweise in Mengen von 1 Gew.-% bis 10 Gew.-%, insbesondere 2 Gew.-% bis 8 Gew.-%, bezogen auf gesamtes Mittel, enthalten.

Bleichverstärkende Übergangsmetallkomplexe, insbesondere mit den Zentralatomen Mn, Fe, Co, Cu, Mo, V, Ti und/oder Ru, werden in üblichen Mengen, vorzugsweise in einer Menge bis zu 1 Gew.-%, insbesondere von 0,0025 Gew.-% bis 0,25 Gew.-% und besonders bevorzugt von 0,01 Gew.-% bis 0,1 Gew.-%, jeweils bezogen auf das gesamte Mittel, eingesetzt.

Als Enzyme kommen insbesondere solche aus der Klasse der Hydrolasen, wie der Proteasen, Esterasen, Lipasen bzw. lipolytisch wirkenden Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen, wie protein-, fett- oder stärkehaltigen Verfleckungen, und Vergrauungen bei. Cellulasen und andere Glykosylhydrolasen können durch das Entfemen von Pilling und Mikrofibrillen zur Farberhaltung und zur Erhöhung der Weichheit des Textils beitragen. Zur Bleiche bzw. zur Hemmung der Farbübertragung können auch Oxidoreduktasen eingesetzt werden. Besonders gut geeignet sind aus Bakterienstämmen oder Pilzen, wie Bacillus subtilis, Bacillus licheniformis, Streptomyces griseus und Humicola insolens gewonnene enzymatische Wirkstoffe. Vorzugsweise werden Proteasen vom Subtilisin-Typ und insbesondere Proteasen, die aus Bazillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease- und/oder Upase-haltige Mischungen bzw. Mischungen mit lipolytisch wirkenden Enzymen von besonderem Interesse. Beispiele für derartige lipolytisch wirkende Enzyme sind die bekannten Cutinasen. Auch Peroxidasen oder Oxidasen haben sich in einigen Fällen als geeignet erwiesen. Zu den geeigneten Amylasen zählen insbesondere α-Amylasen, Iso-Amylasen, Pullulanasen und Pektinasen. Als Cellulasen werden vorzugsweise Cellobiohydrolasen, Endoglucanasen und β-Glucosidasen, die auch Cellobiasen genannt werden, bzw. Mischungen aus diesen eingesetzt. Da sich die verschiedenen Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffen adsorbiert und/oder in Hüllsubstanzen eingebettet sein, um sie gegen vorzeitige Zersetzung zu schützen. Der Anteil der Enzyme, Enzymmischungen oder Enzymgranulate kann beispielsweise etwa 0,1 bis 5 Gew.-%, vorzugsweise 0,1 bis etwa 2 Gew.-% betragen.

Zusätzlich zu den mono- und polyfunktionellen Alkoholen können die Mittel weitere Enzymstabilisatoren enthalten. Beispielsweise können 0,5 bis 1 Gew.-% Natriumformiat eingesetzt werden. Möglich ist auch der Einsatz von Proteasen, die mit löstichen Catciumsatzen und einem Calciumgehalt von vorzugsweise etwa 1,2 Gew.-%, bezogen auf das Enzym, stabilisiert sind. Außer Calciumsalzen dienen auch Magnesiumsalze als Stabilisatoren. Besonders vorteilhaft ist jedoch der Einsatz von Borverbindungen, beispielsweise von Borsäure, Boroxid, Borax und anderen Alkalimetallboraten wie den Salzen der Orthoborsäure (H₃BO₃), der Metaborsäure (HBO₂) und der Pyroborsäure (Tetraborsäure H₂B₄O₇)

Vergrauungsinhibitoren haben die Aufgabe, den von der Faser abgelösten Schmutz in der Flotte suspendiert zu halten und so das Wiederaufziehen des Schmutzes zu verhindern. Hierzu sind wasserlösliche Kolloide meist organischer Natur geeignet, beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestem der Cellulose oder der Stärke. Auch wasserlösliche, saure Gruppen enthaltende Polyamide sind für diesen Zweck geeignet. Weiterhin lassen sich lösliche Stärkepräparate und andere als die obengenannten Stärkeprodukte verwenden, z.B. abgebaute Stärke, Aldehydstärken usw.. Auch Polyvinylpyrrolidon ist brauchbar. Bevorzugt werden jedoch Celluloseether, wie Carboxymethylcellulose (Na-Salz), Methylcellulose, Hydroxyalkylcellulose und Mischether, wie Methylhydroxyethylcellulose, Methylhydroxypropylcellulose, Methylcarboxymethylcellulose und deren Gemische, sowie Polyvinylpyrrolidon beispielsweise in Mengen von 0,1 bis 5 Gew.-%, bezogen auf die Mittel, eingesetzt.

Die Wasch- oder Reinigungsmittel können als optische Aufheller Derivate der Diaminostilbendisulfonsäure bzw. deren Alkalimetallsalze enthalten. Geeignet sind z.B. Salze der 4,4'-Bis(2-anilino-4-morpholino-1,3,5-triazinyl-6-amino)stilben-2,2'-disulfonsäure oder gleichartig aufgebaute Verbindungen, die anstelle der Morpholino-Gruppe eine Diethanolaminogruppe, eine Methylaminogruppe, eine Anilinogruppe oder eine 2-Methoxyethylaminogruppe tragen. Weiterhin können Aufheller vom Typ der substituierten Diphenylstyryle anwesend sein, z.B. die Alkalisalze des 4,4'-Bis(2-sulfostyryl)-diphenyls, 4,4'-Bis(4-chlor-3-sulfostyryl-diphenyls, oder 4-(4-Chlorstyryl)-4'-(2-sulfostyryl)-diphenyls. Auch Gemische der vorgenannten Aufheller können verwendet werden. Einheitlich weiße Granulate werden erhalten, wenn die Mittel außer den üblichen Aufhellern in üblichen Mengen, beispielsweise zwischen 0,1 und 0,5 Gew.-%, vorzugsweise zwischen 0,1 und 0,3 Gew.-%, auch geringe Mengen, beispielsweise 10⁻⁶ bis 10⁻³ Gew.-%, vorzugsweise um 10⁻⁵ Gew.-%, eines blauen Farbstoffs enthalten. Ein besonders bevorzugter Farbstoff ist Tinolux® (Handelsprodukt der Ciba-Geigy).

Als schmutzabweisende Polymere ("soil repellants") kommen solche Stoffe in Frage, die vorzugsweise Ethylenterephthalat- und/oder Polyethylenglykolterephthalatgruppen enthalten, wobei das Molverhältnis Ethylenterephthalat zu Polyethylenglykolterephthalat im Bereich von 50:50 bis 90:10 liegen kann. Das Molekulargewicht der verknüpfenden Polyethylenglykoleinheiten liegt insbesondere im Bereich von 750 bis 5000, d.h., der Ethoxylierungsgrad der polyethylenglykolgruppenhaltigen Polymere kann ca. 15 bis 100 betragen. Die Polymeren zeichnen sich durch ein durchschnittliches Molekulargewicht von etwa 5000 bis 200.000 aus und können eine Block-, vorzugsweise aber eine Random-Struktur aufweisen. Beispiele für handelsübliche Polymere sind die Produkte Milease® T (ICI) oder Repelotex® SRP 3 (Rhöne-Poulenc).

Als Parfümöle bzw. Duftstoffe können einzelne Riechstoffverbindungen, z.B. die synthetischen Produkte vom Typ der Ester, Ether, Aldehyde, Ketone, Alkohole und Kohlenwasserstoffe verwendet werden. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8-18 C-Atomen, Citral, Citronellal, Citronellyloxyacetaldehyd, Cyclamenaldehyd, Hydroxycitronellal, Ulial und Bourgeonal, zu den Ketonen z.B. die Jonone, (α-Isomethylionon und Methylcedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pine-, Citrus-, Jasmin-, Patchouly-, Rosen- oder Ylang-Ylang-ÖI. Ebenfalls geeignet sind Muskateller, Salbeiöl, Kamillenöl, Nelkenöl, Melissenöl, Minzöl, Zimtblätteröl, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl. Die Duftstoffe können direkt in die erfindungsgemäßen Mittel eingearbeitet werden, es kann aber auch vorteilhaft sein, die Duftstoffe auf Träger aufzubringen, welche die Haftung des Parfüms auf der Wäsche verstärken und durch eine langsamere Duftfreisetzung für langanhaltenden Duft der Textilien sorgen. Als solche Trägermaterialien haben sich beispielsweise Cyclodextrine bewährt, wobei die Cyclodextrin-Parfüm-Komplexe zusätzlich noch mit weiteren Hilfsstoffen beschichtet werden können.

Falls gewünscht können die erfindungsgemäßen Waschmittel noch anorganische Salze alsFüll-bzw. Stellmittel enthalten, wie beispielsweise Natriumsulfat, welches vorzugsweise in Mengen von 0 bis 10, insbesondere 1 bis 5 Gew.-% - bezogen auf Mittel - enthalten ist.

Die Erfindung wird nachfolgend durch Beispiele näher erläutert.

### Beispiele:

Im Rahmen der nachfolgenden Beispiele wurde die Wirksamkeit der erfindungsgemäßen Entschäumerzusammensetzungen in verschiedenen Waschmittelrezepturen überprüft. Dabei wurden zu Vergleichszwecken die entsprechenden Rezepturen gemäß dem Stand der Technik mit Entschäumern ausgestattet, die entweder nur eine entschäumend wirksamen Verbindung auf Paraffinbasis oder nur eine entschäumend wirksamen Verbindungen auf Silikonbasis oder ein Gemisch beider entschäumend wirksamen Verbindungen auf einem einzigen Teilchen enthalten. Diese Beispiele sind im Rahmen der nachfolgenden Tabellen mit Ref. 1, Ref. 2 und Ref. 3 kennzeichnet. Zum Vergleich wurden die jeweils bis auf die Entschäumerzusammensetzung identischen Rezepturen mit einer erfindungsgemäßen Entschäumerzusammensetzung überprüft. Diese Beispiele sind im Rahmen der nachfolgenden Tabellen mit B1, B2, B3 und B4 gekennzeichnet.

Die angegebenen Rezepturen wurden (mit Ausnahme des Sulfat- und Entschäumeranteils) in einem Lödige Mischer aus den Einzelkomponenten hergestellt. Der Sulfat- und Entschäumeranteil wurde denen angegebenen Rezepturen separat zugeführt, wobei die Sulfatzugabe in Abhängigkeit vom Entschäumeranteil ad 100 durchgeführt wurde. Das Schaumvermögen der Rezepturen wurde in einer Miele W 985 Waschmaschine unter Ausschluß der Mengenautomatik im 40 und 95°C Waschprogramm ermittelt. Die Dosierung betrug 75g Pulver pro Zyklus bei 3° Wasserhärte. Anschließend wurde jeweils das Schaumverhalten der Rezepturen in Abhängigkeit von der Entschäumermenge ermittelt. Als Ergebnis sind in den nachfolgenden Tabellen die wenigen Mengen angegeben, bei denen ein mittleres als schaumsicher zu bezeichnendes Schaumniveau eingestellt wurde. Das eingestellte Schaumniveau entspricht etwa einer halb gefüllten Trommel, wie durch das Schauglas ersichtlich (Note 3).

Zur Beurteilung der Ergebnisse wurden die bei 40°C benötigte Entschäumermenge, die bei 95°C benötigte Entschäumermenge, die Gesamtmenge an Entschäumer (bezogen auf beide Waschtemperaturen) und das Gewichtsverhältnis der Entschäumermengen bei 40 und 95°C angegeben. Die in den nachfolgenden Tabellen angegebenen Werte stellen Gew.-%, bezogen auf die gesamte eingesetzte Waschmittelmenge dar.

**Tabelle 1**

| Inhaltsstoff | Ref.1 | Ref.1 | Ref.1 | B1 | Ref. 2 | Ref. 2 | Ref. 2 | B2 |
|---|---|---|---|---|---|---|---|---|
| ABS | 9,75 | 9,75 | 9,75 | 9,75 | | | | |
| FAS C12/18 | | | | | 9,75 | 9,75 | 9,75 | 9,75 |
| FA C12/18 7EO | 3,25 | 3,25 | 3,25 | 3,25 | 3,25 | 3,25 | 3,25 | 3,25 |
| Na-Seife 16/18 | 1,5 | 1,5 | 1,5 | 1,5 | 1,5 | 1,5 | 1,5 | 1,5 |
| Zeolith | 25 | 25 | 25 | 25 | 25 | 25 | 25 | 25 |
| STPP | | | | | | | | |
| Phosphonat | 1 | 1 | 1 | 1 | 1 | 1 | 1 | 1 |
| Soda | 15 | 15 | 15 | 15 | 15 | 15 | 15 | 15 |
| Na-Silikat | 3 | 3 | 3 | 3 | 3 | 3 | 3 | 3 |
| Acetophosphonat | 0,5 | 0,5 | 0,5 | 0,5 | 0,5 | 0,5 | 0,5 | 0,5 |
| Polycarboxylat | 3 | 3 | 3 | 3 | 3 | 3 | 3 | 3 |
| Na-Percarbonat | 15 | 15 | 15 | 15 | 15 | 15 | 15 | 15 |
| TAED | 3 | 3 | 3 | 3 | 3 | 3 | 3 | 3 |
| Wasser | 10 | 10 | 10 | 10 | 10 | 10 | 10 | 10 |
| Na-Sulfat | ad 100 | ad 100 | ad 100 | ad 100 | ad 100 | ad 100 | ad 100 | ad 100 |
| Dehydran® 770 | | X | | | | X | | |
| Dehydran® 750 | | | X | | | | X | |
| Dehydran® 760 | X | | | | X | | | |
| Gemisch aus Dehydran® 770 und 750 | | | | A | | | | B |
| Gemisch aus Dehydran 770 und 760 | | | | | | | | |
| Ben. Menge bei 40 °C | 3 | 0,75 | 3,5 | 1,1 | 3,5 | 0,5 | 2,5 | 1 |
| Ben. Menge bei 95 °C | 1,25 | 1,5 | 1 | 1,1 | 1,75 | 3,5 | 1,5 | 1,25 |
| Gesamtmenge | 4,25 | 2,25 | 4,5 | 2,2 | 5,25 | 4 | 4 | 2,25 |
| Mengenverhältnis | 1:0,4 | 1:2 | 1:0,3 | 1:1 | 1:0,5 | 1:7 | 1:0,6 | 1:1,3 |

**Tabelle 2**

| Inhaltsstoff | Ref. 3 | Ref. 3 | Ref. 3 | B3 | B4 |
|---|---|---|---|---|---|
| ABS | 9,75 | 9,75 | 9,75 | 9,75 | 9,75 |
| FAS C12/18 | | | | | |
| FA C12/18 7EO | 3,25 | 3,25 | 3,25 | 3,25 | 3,25 |
| Na-Seife C16/18 | 1,5 | 1,5 | 1,5 | 1,5 | 1,5 |
| Zeolith | | | | | 25 |
| STPP | 25 | 25 | 25 | 25 | |
| Phosphonat | 1 | 1 | 1 | 1 | 1 |
| Soda | 15 | 15 | 15 | 15 | 15 |
| Na-Silikat | 3 | 3 | 3 | 3 | 3 |
| Acetophosphonat | 0,5 | 0,5 | 0,5 | 0,5 | 0,5 |
| Polycarboxylat | 3 | 3 | 3 | 3 | 3 |
| Na-Percarbonat | 15 | 15 | 15 | 15 | 15 |
| TAED | 3 | 3 | 3 | 3 | 3 |
| Wasser | 10 | 10 | 10 | 10 | 10 |
| Na-Sulfat | ad 100 | ad 100 | ad 100 | ad 100 | ad 100 |
| Dehydran® 770 | | X | | | |
| Dehydran® 750 | | | X | | |
| Dehydran® 760 | X | | | | |
| Gemisch aus Dehydran® 770 und 750 | | | | C | |
| Gemisch aus Dehydran® 770 und 760 | | | | | D |
| Ben. Menge bei 40 °C | 3,5 | 1 | 4 | 1,4 | 1,3 |
| Ben. Menge bei 95 °C | 1,4 | 1,75 | 1,25 | 1,3 | 1,3 |
| Gesamtmenge | 4,9 | 2,75 | 5,25 | 2,7 | 2,6 |
| Mengenverhältnis | 1:0,4 | 1:1,8 | 1:0,3 | 1:0,9 | 1:1 |

| | | | | | |
|---|---|---|---|---|---|
| A: 1 Gew.-% Dehydran® 750 + 0,75 Gew.-% Dehydran® 770 | | | | | |
| B: 4,25 Gew.-% Dehydran® 750 + 5,5 Gew.-% Dehydran® 770 | | | | | |
| C: 4,25 Gew.-% Dehydran® 750 + 2,5 Gew.-% Dehydran® 770 | | | | | |
| D: 1,5 Gew.-% Dehydran® 750 + 0,75 Gew.-% Dehydran® 770 | | | | | |

Wie aus den Tabellen 1 und 2 eindeutig hervorgeht, bewirken die erfindungsgemäßen Entschäumerzusammensetzungen eine Reduzierung der insgesamt für gute Ergebnisse benötigten Entschäumermengen und darüber hinaus ein gleichmäßiges Entschäumungsergebnis für niedrige und hohe Waschtemperaturen.

## Patentansprüche

1. Bei Raumtemperatur feste Teilchen mit einer Teilchengröße von 50 µm bis 3 mm enthaltende Entschäumerzusammensetzung, mindestens enthaltend mindestens eine entschäumend wirkende Verbindung auf Paraffinbasis und mindestens eine entschäumend wirkende Verbindung auf Silikonbasis, wobei mindestens eine entschäumend wirkende Verbindung auf Paraffinbasis und mindestens eine entschäumend wirkende Verbindung auf Silikonbasis auf räumlich getrennten Teilchen vorliegen wobei mindestens zwei räumlich voneinander getrennte Teilchen derart aufgebaut sind, dass mindestens eines der Teilchen eine entschäumend wirkende Verbindung auf Silikonbasis und keine entschäumend wirkende Verbindung auf Paraffinbasis oder eine entschäumend wirkende Verbindung auf Paraffinbasis und keine entschäumend wirkende Verbindung auf Silikonbasisund enthält, und der Gehalt an Verbindungen auf Paraffin- bzw. Silikonbasis in der Entschäumerzusammensetzung 1 bis 50 Gew.-% beträgt.

2. Entschäumerzusammensetzung nach Anspruch 1, **dadurch gekennzeichnet, dass** das Verhältnis von entschäumend wirkenden Verbindungen auf Paraffinbasis zu entschäumend wirkenden Verbindungen auf Silikonbasis 10:1 bis 1:10 beträgt.

3. Entschäumerzusammensetzung nach einem der Ansprüche 1 bis 2, **dadurch gekennzeichnet, dass** das Verhältnis der entschäumend wirkenden Verbindungen auf Paraffinbasis zu den entschäumend wirkenden Verbindungen auf Silikonbasis so gewählt wird, dass die entschäumende Wirkung in einem Temperaturbereich von 50 bis 80 °C im wesentlichen gleich bleibt.

4. Entschäumerzusammensetzung nach einem der Ansprüche 1 bis 3, **dadurch gekennzeichnet, dass** sie als Pulver oder Granulat vorliegt.

5. Verfahren zur Herstellung einer Entschäumerzusammensetzung nach einem der Ansprüche 1 bis 4 bei dem jeweils mindestens ein teilchenförmiger Feststoff, der als Wirkstoffkomponente mindestens eine entschäumend wirkende Verbindung auf Paraffinbasis enthält und mindestens ein teilchenförmiger Feststoff, der als Wirkstoffkomponente mindestens eine entschäumend wirkende Verbindung auf Silikonbasis enthält, vermischt werden, wobei mindestens eine Sorte teilchenförmiger Feststoff eine Wirkstoffkomponente der anderen Sorte teilchenförmiger Feststoff nicht enthält.

6. Wasch- oder reinigungsaktive Zusammensetzung, **dadurch gekennzeichnet, dass** sie eine Entschäumerzusammensetzung gemäß einem der Ansprüche 1 bis 4 in einer Menge von 0,05 bis 20 Gew.-% enthält.

7. Zusammensetzung nach Anspruch 6, **dadurch gekennzeichnet, dass** die Entschäumerzusammensetzung in einer Menge vorliegt, bei der das Verhältnis von zur gewünschten Entschäumung benötigten Menge an Entschäumerzusammensetzung bei 40°C zu zur gewünschten Entschäumung benötigten Menge an Entschäumerzusammensetzung bei 95°C mehr als 0,6 bis weniger als 1,8 beträgt.

8. Verwendung einer Entschäumerzusammensetzung gemäß einem der Ansprüche 1 bis 4 zur Herstellung von Wasch- oder Reinigungsmitteln.

## Claims

1. A defoamer composition containing particles solid at room temperature with a particle size of 50 µm to 3 mm and further at least containing at least one paraffin-based defoaming compound and at least one silicone-based defoaming compound, at least one paraffin-based defoaming compound and at least one silicone-based defoaming compound being present on spatially separate particles, the composition of at least two spatially separate particles being such that at least one of the particles contains a silicone-based defoaming compound and no paraffin-based defoaming compound or a paraffin-based defoaming compound and no silicone-based defoaming compound and the content of paraffin or silicone-based compounds in the defoamer composition being from 1 to 50% by weight.

2. A defoamer composition as claimed in claim 1, **characterized in that** the ratio of paraffin-based defoaming compounds to silicone-based defoaming compounds is 10:1 to 1:10.

3. A defoamer composition as claimed in claim 1 or 2, **characterized in that that** the ratio of paraffin-based defoaming compounds to silicone-based defoaming compounds is selected so that the defoaming effect remains substantially the same at temperatures in the range from 50 to 80°C.

4. A defoamer composition as claimed in any of claims 1 to 3, **characterized in that** it is present in powder or granular form.

5. A process for the production of the defoamer composition claimed in any of claims 1 to 4, in which at least one particulate solid containing at least one paraffin-based defoaming compound as active component and at least one particulate solid containing a silicone-based defoaming compound as active component are mixed, at least one type of particulate solid not containing an active component of the other type of particulate solid.

6. An active washing or cleaning composition, **characterized in that** it contains the defoamer composition claimed in any of claims 1 to 4 in a quantity of 0.05 to 20% by weight

7. A composition as claimed in claim 6, **characterized in that** the defoamer composition is present in a quantity where the ratio of the quantity of defoamer composition needed for the required defoaming effect at 40°C to the quantity of defoamer composition needed for the required defoaming effect at 95°C is more than 0.6 to less than 1.8.

8. The use of the defoamer composition claimed in any of claims 1 to 4 for the production of washing or cleaning preparations.

## Revendications

1. Composition antimousse contenant des particules solides à la température ambiante ayant une granulométrie de 50 µm à 3 mm, contenant au moins un composé à action antimousse à base de paraffine et au moins un composé à action antimousse à base de silicone, au moins un composé à action antimousse à base de paraffine et au moins un composé à action antimousse à base de silicone se présentant sur des particules séparées dans l'espace, au moins deux particules séparées l'une de l'autre dans l'espace ayant une structure telle qu'au moins l'une des particules contienne un composé à action antimousse à base de silicone et pas de composé à action antimousse à base de paraffine, ou un composé à action antimousse à base de paraffine et pas de composé à action antimousse à base de silicone, et la teneur en composés à base de paraffine ou de silicone dans la composition antimousse étant de 1 à 50 % en poids.

2. Composition antimousse selon la revendication 1,
**caractérisée en ce que**
le rapport entre les composés à action antimousse à base de paraffine et les composés à action antimousse à base de silicone est de 10:1 à 1:10.

3. Composition antimousse selon l'une des revendications 1 à 2,
**caractérisée en ce que**
le rapport entre les composés à action antimousse à base de paraffine et les composés à action antimousse à base de silicone est choisi de manière à ce que l'action antimousse reste essentiellement identique dans un domaine de température de 50 à 80°C.

4. Composition antimousse selon l'une des revendications 1 à 3,
**caractérisée en ce qu'**
elle se présente sous la forme de poudre ou de granulat.

5. Procédé de préparation d'une composition antimousse selon l'une des revendications 1 à 4, selon lequel on mélange au moins une substance solide particulaire qui contient comme composant actif au moins un composé à action antimousse à base de paraffine, et au moins une substance solide particulaire qui contient comme composant actif au moins un composé à action antimousse à base de silicone, dont au moins un type de substance solide particulaire ne contenant pas de composant actif de l'autre type de substance solide particulaire.

6. Composition ayant une action lavante ou nettoyante,
**caractérisée en ce qu'**
elle contient une composition antimousse selon l'une des revendications 1 à 4 dans une quantité de 0,05 à 20 % en poids.

7. Composition selon la revendication 6,
**caractérisée en ce que**
la composition antimousse se présente en quantité telle que le rapport entre la quantité de composition antimousse nécessaire au démoussage souhaité à 40°C et la quantité de composition antimousse nécessaire au démoussage souhaité à 95°C, soit supérieur à 0,6 à inférieur à 1,8.

8. Utilisation d'une composition antimousse selon l'une quelconque des revendications 1 à 4, pour la préparation de produits de lavage et de nettoyage.
